(19) Europäisches Patentamt
European Patent Office
Office européen des brevets

(11) **EP 3 213 925 A2**

(12) **EUROPÄISCHE PATENTANMELDUNG**

(43) Veröffentlichungstag:
06.09.2017 Patentblatt 2017/36

(51) Int Cl.:
***B41M 5/00*** *(2006.01)*

(21) Anmeldenummer: **17157590.5**

(22) Anmeldetag: **23.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **24.02.2016 DE 102016202903**
**24.02.2016 DE 102016202898**

(71) Anmelder: **Laudert GmbH + Co. KG**
**48691 Vreden (DE)**

(72) Erfinder:
• **BOHN, Daniel**
**40822 Mettmann (DE)**

• **FEHMER, Stefan**
**48691 Vreden (DE)**
• **JUNG, Ulrich**
**65551 Limburg (DE)**
• **RAABE, Timo**
**42781 Haan (DE)**
• **URBAN, Peter**
**42117 Wuppertal (DE)**

(74) Vertreter: **Werner & ten Brink**
**Patentanwälte**
**Partnerschaftsgesellschaft mbB**
**Am Berghang 61**
**48455 Bad Bentheim (DE)**

(54) **VERFAHREN ZUM ANGLEICHEN ZWEIER PAPIERE, VORRICHTUNG MIT MITTELN ZUR AUSFÜHRUNG DES VERFAHRENS SOWIE COMPUTERPROGRAMM MIT EINER IMPLEMENTATION DES VERFAHRENS**

(57) Die Erfindung ist ein Verfahren und ein nach dem Verfahren arbeitendes System zum Angleichen eines Proofpapiers (26) an ein zu simulierendes Auflagenpapier (24) zum Erhalt einer lichtartunabhängigen, messtechnischen und/oder visuellen Übereinstimmung, wobei zur Angleichung an das Auflagenpapier (24) beim Erstellen eines Proofdrucks (36) mittels eines Proofdruckers (10) auf das Proofpapier (26) ein Aufheller (48) mit einer als Aufheller-Zielflächendeckung (102) vorgegebenen Flächendeckung aufgedruckt wird.

Fig. 7

**Beschreibung**

Die hier vorgeschlagene Neuerung betrifft zuvorderst ein Verfahren zum visuellen und messtechnischen Angleichen zweier Papiere sowie ein nach dem Verfahren arbeitendes System. Im Weiteren betrifft die Neuerung auch ein eine Implementation des Verfahrens umfassendes Computerprogramm und einen Computer, in dessen Speicher ein solches Computerprogramm geladen ist.

Die Druckindustrie stellt dem Markt typischerweise mittels Digitaldruck Drucke im mittleren Auflagenbereich und mittels Offsetdruck oder dergleichen Drucke im oberen Auflagenbereich zur Verfügung. Dabei ist von einer Vielzahl von Faktoren abhängig, wie der entsprechend der üblichen Fachterminologie im Folgenden als Auflagendruck bezeichnete finale Ausdruck schließlich visuell und messtechnisch erscheint. Zu diesen Faktoren gehören insbesondere die Art der Drucktechnologie (Digitaldruck, Offsetdruck, Flexodruck etc.), die jeweils verwendeten Farben, das verwendete Druckpapier (Substrat), Druckeinstellungen (z.B. Geschwindigkeit, Anpressdruck etc.), sowie Umgebungsbedingungen, wie zum Beispiel die Raumtemperatur und die Luftfeuchtigkeit.

An dieser Stelle sei darauf hingewiesen, dass die Begriffe "Substrat" und "Papier" in der hier vorgelegten Beschreibung sowie entsprechend der üblichen Fachterminologie Synonyme sind und auch in dieser Weise gebraucht werden. Die Begriffe "Papier" und "Substrat" können demnach auch gegeneinander ausgetauscht werden. Gleiches gilt für ähnliche Begriffe entsprechend, zum Beispiel für "Auflagenpapier" und "Auflagensubstrat" sowie "Proofpapier" und "Proofsubstrat".

Selbstverständlich verlangt der Markt, dass der Auflagendruck sowohl visuell wie auch messtechnisch definierten Vorgaben entspricht. Typischerweise wird das Layout digital an einem Bildschirm erstellt und soll im späteren Auflagendruck möglichst denselben visuellen Eindruck erzielen.

Um dies zu gewährleisten, werden sämtliche Produktionsschritte einem grundsätzlich an sich bekannten Farbmanagementprozess (Colormanagement) unterworfen. Allgemein soll dieser durchaus komplexe Prozess sicherstellen, dass ein Layout auf jedem Medium (z.B. Monitor einerseits und Auflagendruck andererseits) identisch ist.

Zu diesem Zweck erfolgt typischerweise zwischen der Gestaltung am Bildschirm und dem Auflagendruck ein Zwischenschritt. Dabei wird der spätere Auflagendruck mit einem dafür vorgesehenen Drucker simuliert. Das Druckergebnis dieses Druckvorgangs ist der sogenannte Proofdruck, der in der Fachterminologie - und so auch im Folgenden - oftmals kurz als Proof bezeichnet wird. Der für den Proofdruck verwendete Drucker wird entsprechend als Proofdrucker bezeichnet und als Proofdrucker kommt oftmals ein Tintenstrahldrucker (Inkjet-Drucker) zum Einsatz.

Der Proofdruck hat zweierlei Funktionen: Einerseits dient der Proofdruck als Orientierung für den Bediener der Druckmaschine (Drucker), um diese für den Auflagendruck entsprechend einzustellen und kontinuierlich zu prüfen, ob die Vorgaben während des gesamten Drucks erfüllt sind. Andererseits - und dies steht im Folgenden im Vordergrund - dient der Ausdruck auf dem Proofdrucker als visuelles und farbverbindliches Muster (Contract-Proof) für den Kunden. Der spätere Auflagendruck muss innerhalb bestimmter Grenzen mit dieser Simulation übereinstimmen, ansonsten kann es zu Reklamationen bezüglich des Auflagendrucks kommen.

Ziel eines jeden Proof-Verfahrens ist es also, ein in großer Auflage zu produzierendes Druckobjekt für eine Abnahme durch den Kunden und als Vorgabe für den Auflagendruck vorab möglichst exakt zu simulieren. Typischerweise werden Inkjet-Drucksysteme verschiedener Bauarten eingesetzt, die speziell auf das Inkjet-Verfahren abgestimmte Proofpapiere bedrucken.

Die Simulation des Auflagendrucks durch einen Proofdruck wird allerdings wesentlich dadurch erschwert, dass das für den Auflagendruck vorgesehene Papier (Auflagenpapier) oft nicht im Proofdrucker verwendet werden kann. Der Grund dafür liegt in den Papieren selbst, da diese jeweils spezifisch für eine Drucktechnologie entwickelt sind. Beispielsweise ist die Beschaffenheit eines Druckpapiers für den Offsetdruck im Vergleich zu einem Druckpapier für den Tintenstrahldruck so deutlich anders, dass Inkjet-Farbe auf einem Offsetpapier nicht ausreichend trocknen kann. Außerdem weisen typische Auflagenpapiere aufgrund der verwendeten preisgünstigen Materialien oftmals im blauen Bereich des sichtbaren elektromagnetischen Spektrums (ca. bei 380 nm bis 480 nm) einen Abfall der spektralen Remission auf, wenn sie unter UV-armer Beleuchtung betrachtet werden. Dadurch erscheinen typische Auflagenpapiere nicht "hochweiß", sondern eher gelblich. Um diesem Umstand zu begegnen und dem Marktwunsch nach hochweißen und gleichzeitig kostengünstigen Papieren nachzukommen, werden bei der Papierherstellung seit langem im Folgenden als Aufheller bezeichnete optische Aufheller (Optical Brightening Agents, OBAs) eingesetzt.

Bei Papier werden optische Aufheller zumeist in einer Menge von 0,1% bis 3%, bezogen auf den Faserstoff (Aufnahmesubstrat), eingesetzt. Wie bei der Färbung mit Direktfarbstoffen ziehen die optischen Aufheller auf die Faser auf. Erst danach und wenn sie auf der Faser fixiert sind, sind die Aufhellermoleküle voll wirksam. Der optische Aufheller ist also mit der Faser besonders eng verbunden, wie dies zum Beispiel in der DE 199 17 742 C2 beschrieben ist.

Die Höhe der Emission im blauen Bereich des Spektrums (im Bereich von 450 nm) entspricht dabei indirekt der im Substrat des Auflagen- oder Proofpapiers befindlichen OBA-Konzentration. Typische, in der Druckindustrie eingesetzte Aufheller absorbieren im unsichtbaren UV-Bereich des Spektrums (etwa im Bereich von 300 nm bis 380 nm) Strahlungsenergie und emittieren diese (praktisch unmittelbar) wieder im sichtbaren, blauen Bereich des elektromagnetischen Spektrums im Bereich von 450 nm. Dadurch kann in Auflagenpapieren der oben beschriebene fehlende Blauanteil effektiv und kostengünstig kompensiert werden. Gerade die Verstärkungswirkung bei ca. 450 nm führt zu einer - gewünschten - Steigerung des Weißgrades, wenn dieser mit UV-Lumineszenz gemessen wird. Diese Erscheinung nennt man Fluoreszenz. Sie führt dazu, dass ein Aufzeichnungsmedium mit einem Aufnahmesubstrat mit optischem Aufhellerzusatz dem Betrachter weißer erscheint als dieses in Wirklichkeit ist. Aufheller unterscheiden sich damit erheblich von den Direktfarbstoffen, welche das Licht nur im sichtbaren Spektrum absorbieren und emittieren, ohne dabei die auftreffende Wellenlänge wesentlich in ihrer Lage zu verschieben.

Im Gegensatz zu Auflagenpapieren weisen typische für den Proofdruck verwendete Papiere (Proofpapiere) neben einer allgemein höheren Remission auch im blauen Bereich des Spektrums eine allgemein stärkere Remission aufgrund von Aufhellern auf, wie dies in der Darstellung in Abbildung 2 der dieser Anmeldung zugrunde liegenden DE 10 2016 202 898.7 und

DE 10 2016 202 903.2 gezeigt ist. Der Inhalt der

DE 10 2016 202 898.7 sowie der DE 10 2016 202 903.2 wird hiermit vollinhaltlich in die hier vorgelegte Beschreibung mit einbezogen, auch zu dem Zwecke, Merkmale dieses Dokuments in Ansprüche zur Definition der der hier vorgelegten Beschreibung zugrunde liegenden Erfindung aufzunehmen.

Problematisch ist dabei allerdings der Umstand, dass die Stärke der Emission im blauen Bereich des Spektrums von der UV-Strahlung der jeweiligen Beleuchtung abhängig ist und der UV-Anteil in der von der jeweiligen Lichtquelle abgegebenen Strahlung damit den Weißpunkt des jeweiligen Papiers bestimmt. Variierende UV-Anteile, zum Beispiel aufgrund unterschiedlicher Lichtquellen / Beleuchtung bei einer visuellen Prüfung und einer messtechnischen Prüfung, führen zu unterschiedlichen Weißpunkten. Es ergibt sich somit eine vom Aufheller abhängige (aufhellerbedingte) Verschiebung des Weißpunktes der Papiere.

Dies führt zu Schwierigkeiten beim Colormanagement und bei der Abmusterung / beim visuellem Vergleich von Proofdruck und Auflagendruck, indem bei Farbmessungen mit UV-Cut-Filtern (UV-Sperrfilter) die OBA-Wirkung (Aufhellung) zwar weitgehend eliminiert werden kann, die so erreichte messtechnische Angleichung von Proofdruck und Auflagendruck dem visuellen Vergleich aber nicht standhält. Dies ist insbesondere in den oben beschriebenen Eigenschaften des Aufhellers oder der Aufheller begründet und kommt vor allem durch unterschiedliche Aufhellerkonzentrationen in den Proof- und Auflagenpapieren zustande.

Darüber hinaus haben die hier erläuterten Verschiebungen beim Weißpunkt auch einen direkten Einfluss auf die auf das Papier gedruckten Farben, so dass es zu einer vom Aufheller abhängigen Verschiebung der Farborte (aufhellerinduzierte Verschiebung der Farborte) kommt. Nur durch eine identische Aufhelleranregung erscheinen Farben relativ zueinander immer gleich.

Eine Aufgabe der vorliegenden Erfindung besteht ausgehend von der vorstehend skizzierten Situation darin, ein Verfahren sowie ein System zur Ausführung des Verfahrens anzugeben, mittels dessen die beschriebene Problematik gelöst werden kann, insbesondere darin, ein Verfahren sowie ein System anzugeben, mittels dessen ein als Proofpapier vorgesehenes Papier an ein zu simulierendes Auflagenpapier in einer Art und Weise angepasst werden kann, dass sich messtechnisch und visuell eine lichtartunabhängige Übereinstimmung oder zumindest im Wesentlichen eine solche Übereinstimmung ergibt.

Diese Aufgabe wird mittels eines Verfahrens mit den Merkmalen des Anspruchs 1 gelöst. Dazu ist bei einem Verfahren zum Angleichen eines Proofpapiers, insbesondere eines unaufgehellten Proofpapiers (ohne OBA) oder auch eines Proofpapiers mit einer vergleichsweise geringen Grundkonzentration eines Aufhellers, an ein zu simulierendes Auflagenpapier zum Zwecke des Erhalts einer messtechnisch und/oder visuell lichtartunabhängigen Übereinstimmung beider Papiere vorgesehen, dass zur Angleichung des Proofpapiers an das Auflagenpapier beim Erstellen eines Proofdrucks mittels eines Proofdruckers, zum Beispiel mittels eines als Proofdrucker fungierenden Inkjet-Druckers (Proofinkjet), auf das Proofpapier ein Aufheller, insbesondere ein Aufheller in Form einer aufhellerhaltigen OBA-Tinte, mit einer als Aufheller-Zielflächendeckung vorgegebenen Flächendeckung aufgedruckt wird.

Bezüglich der Vorrichtung (System) wird die genannte Aufgabe erfindungsgemäß gelöst mittels eines Systems mit den Merkmalen des parallelen Vorrichtungsanspruchs. Vorteilhafte Ausgestaltungen sind Gegenstand der auf diesen direkt oder indirekt rückbezogenen abhängigen Ansprüche oder ergeben sich aus einer Umsetzung einzelner oder mehrerer Merkmale des Anspruchs 1 und der darauf rückbezogenen Ansprüche.

Für die weitere Beschreibung gilt zur Vermeidung unnötiger Wiederholungen, dass Merkmale und Details, die im Zusammenhang mit dem genannten Verfahren zum Angleichen eines Proofpapiers an ein zu simulierendes Auflagenpapier sowie eventueller Ausgestaltungen beschrieben sind, selbstverständlich auch im Zusammenhang mit und im Hinblick auf ein zur Durchführung des Verfahrens eingerichtetes System und umgekehrt gelten, so dass das Verfahren auch mittels einzelner oder mehrerer Verfahrensmerkmale fortgebildet sein kann, die sich auf mittels des Systems ausgeführte Verfahrensschritte beziehen und das System entsprechend mittels einzelner oder mehrerer Vorrichtungsmerkmale fortgebildet sein kann, die sich auf gegenständliche Mittel des Systems beziehen, die zur Ausführung von im Rahmen des Verfahrens ausgeführten Verfahrensschritten bestimmt und/oder eingerichtet sind.

Der Vorteil der Erfindung besteht darin, dass durch das Aufdrucken des Aufhellers mit der vorgegebenen Aufheller-Zielflächendeckung der farbmetrische Weißpunkt des Proofpapiers gezielt verschoben wird, so dass die angestrebte lichtartunabhängige messtechnische und/oder visuelle Übereinstimmung des Proofpapiers mit dem jeweiligen Auflagenpapier erreicht wird. Über den Flächendeckungsgrad des aufgedruckten Aufhellers wird dabei eine zum Erreichen dieser Übereinstimmung notwendige Aufhelleremission hergestellt.

Die abhängigen Ansprüche sind auf bevorzugte Ausführungsformen der vorliegenden Erfindung gerichtet.

Bei einer Ausführungsform des Verfahrens werden zur Ermittlung der Aufheller-Zielflächendeckung einerseits das Auflagenpapier und andererseits ein mittels des Proofdruckers mit dem Aufheller auf das Proofpapier aufgedrucktes Aufhellertestchart miteinander verglichen, wobei das Aufhellertestchart eine Mehrzahl von Messfeldern mit unterschiedlichen Flächendeckungen des Aufhellers umfasst. Der Vergleich erfolgt zum Beispiel durch Augenschein oder indem einerseits das Auflagenpapier und andererseits das mittels des Proofdruckers auf das Proofpapier aufgedruckte Aufhellertestchart spektralfotometrisch vermessen werden.

Die Messfelder mit ihren unterschiedlichen Flächendeckungen des Aufhellers erlauben eine Erkennung der Wirkung des Aufhellers auf dem Proofpapier. Aufgrund einer durch Augenschein ermittelten Gleichheit oder ausreichenden Gleichheit des Auflagenpapiers und eines Messfelds des Aufhellertestcharts kann die Flächendeckung des Aufhellers des jeweiligen Messfelds als Aufheller-Zielflächendeckung verwendet werden. Eine spektralfotometrische Vermessung der Messfelder liefert automatisch auswertbare Daten zur Wirkung des Aufhellers auf dem Proofpapier. Die spektralfotometrische Vermessung des Auflagenpapiers liefert automatisch auswertbare Daten zum Auflagenpapier. Beide fließen in die automatische Ermittlung der Aufheller-Zielflächendeckung ein.

Bei einer weiteren Ausführungsform des Verfahrens wird jedes Messfeld des Aufhellertestcharts zweimal spektralfotometrisch vermessen und zwar einmal mit UV-Einfluss und einmal ohne UV-Einfluss oder mit einem im Vergleich zu der ersten Messung anders gearteten UV-Einfluss. Insoweit kommt in Betracht, bei der zweimaligen spektralfotometrischen Messung einerseits eine Messung ohne einen den UV-Anteil der von der jeweiligen Lichtquelle ausgehenden Strahlung beeinflussenden Filter oder dergleichen und andererseits eine Messung mit einem den UV-Anteil der von der jeweiligen Lichtquelle ausgehenden Strahlung beeinflussenden Filter oder dergleichen, zum Beispiel einem sogenannten UV-Cut-Filter, durchzuführen, also zum Beispiel eine erste Messung ohne UV-Cut-Filter und eine zweite Messung mit UV-Cut-Filter. Im Interesse einer besseren Lesbarkeit der weiteren Beschreibung wird diese auf Basis einer ersten Messung ohne UV-Cut-Filter (= mit UV-Einfluss) und einer zweiten Messung mit UV-Cut-Filter (= ohne UV-Einfluss) fortgesetzt. Weil es bei der zweimaligen spektralfotometrischen Vermessung jedes Messfelds des Aufhellertestcharts tatsächlich nur auf einen jeweils unterschiedlichen UV-Einfluss ankommt, ist jede Erwähnung einer Messung einerseits mit UV-Einfluss oder ohne UV-Cut-Filter und andererseits ohne UV-Einfluss oder mit UV-Cut-Filter als eine Messung mit einem ersten UV-Einfluss und eine Messung mit einem von dem ersten UV-Einfluss verschiedenen zweiten UV-Einfluss zu lesen und dies ist im Folgenden stets gedanklich zu ergänzen.

Auf Basis der Messergebnisse beider Messungen wird für jedes Messfeld ein für die jeweilige Flächendeckung des Aufhellers charakteristischer Wert ermittelt. Dieser Wert kodiert die aufhellerinduzierte Emission des jeweiligen Messfelds und diese ergibt sich aufgrund der beim Drucken des Messfelds verwendeten Flächendeckung des Aufhellers. Entsprechend der Anzahl der (ausgewerteten) Messfelder ergibt sich eine Anzahl von aufhellerinduzierten Emissionen. Auf Basis aller ermittelten Werte wird eine Look-Up-Funktion oder eine Look-Up-Tabelle ermittelt. Diese bildet die Basis für eine automatische Ermittlung der Aufheller-Zielflächendeckung, also derjenigen Flächendeckung, mit der beim Erstellen eines Proofdrucks mittels des Proofdruckers das Proofpapier mit Aufheller bedruckt wird.

Bei einer weiteren Ausführungsform des Verfahrens wird bei der spektralfotometrischen Vermessung des Auflagenpapiers auch das Auflagenpapier zweimal vermessen und zwar einmal mit einem ersten UV-Einfluss und einmal mit einem von dem ersten UV-Einfluss verschiedenen zweiten UV-Einfluss, insbesondere einmal mit UV-Einfluss und einmal ohne UV-Einfluss. Auf Basis der Messergebnisse beider Messungen wird eine aufgrund von im Auflagenpapier enthaltenem Aufheller resultierende aufhellerinduzierte Emission des Auflagenpapiers ermittelt. Im Rahmen der Angleichung des Proofpapiers an das Auflagenpapier ist die Emission des Proofpapiers an die ermittelte Emission des Auflagenpapiers anzupassen. Die ermittelte Emission des Auflagenpapiers ist daher der Remissionssollwert, also die Ziel-Remission. Anhand der aufhellerinduzierten Ziel-Emission wird unter Verwendung der Look-Up-Funktion oder der Look-Up-Tabelle die Aufheller-Zielflächendeckung ermittelt, mit der mittels des Proofdruckers beim Proofdruck das Proofpapier mit dem Aufheller bedruckt wird.

Bei einer nochmals weiteren Ausführungsform des Verfahrens wird anhand der aufgrund der Messung ohne UV-Einfluss resultierenden Messergebnisse der spektralfotometrischen Vermessung des Auflagenpapiers sowie anhand einer spektralfotometrischen Vermessung eines mittels des Proofdruckers auf das Proofpapier aufgedruckten Farbtestcharts eine Tinten-Zielflächendeckung ermittelt. Diese wird beim Drucken des Proofdrucks mittels des Proofdruckers beim Drucken von Druckfarben berücksichtigt. Der besondere Vorteil dieser Ausführungsform besteht darin, dass hier auch Wechselwirkungen zwischen Aufheller, insbesondere einem Aufheller in Form einer aufhellerhaltigen OBA-Tinte, und der konventionellen, farbgebenden Tinte erfasst werden können.

Ein zum Ausführen des Verfahrens wie hier und im Folgenden beschriebenes System umfasst zumindest den Proofdrucker, zum Beispiel einen als Proofdrucker fungierenden Inkjet-Drucker, sowie Mittel zur Durchführung des Verfahrens und/oder einzelner Ausgestaltungen des Verfahrens, zum Beispiel eine Verarbeitungseinheit in Form eines Computers, in dessen Speicher ein Computerprogramm mit einer Implementation des Verfahrens in Software geladen ist, so dass bei einer Ausführung des Computerprogramms und unter Kontrolle des Computerprogramms das Verfahren ausführbar ist und bei Betrieb des Systems und der Verarbeitungseinheit ausgeführt wird.

Bei einer Ausführungsform des System umfasst dieses zum Bedrucken des Proofpapiers sowie zum Drucken des Proofdrucks einen Proofdrucker, insbesondere einen als Proofdrucker fungierenden Inkjet-Drucker, sowie eine Verarbeitungseinheit, zum Beispiel einen als Verarbeitungseinheit fungierenden Computer oder ein als Verarbeitungseinheit fungierendes Computersystem, zur Ausführung des hier und im Folgenden beschriebenen Verfahrens. Das System ist zum Angleichen eines Proofpapiers an ein zu simulierendes Auflagenpapier zum Zwecke des Erhalts einer lichtartunabhängigen messtechnischen und/oder visuellen Übereinstimmung des Proofpapiers mit dem Auflagenpapier bestimmt und eingerichtet. Mittels des Proofdruckers ist zur Angleichung des Proofpapiers an das Auflagenpapier beim Erstellen eines Proofdrucks auf das Proofpapier ein Aufheller mit einer als Aufheller-Zielflächendeckung vorgegebenen Flächendeckung aufdruckbar und wird beim Betrieb des Systems auf das Proofpapier aufgedruckt.

Bei einer weiteren Ausführungsform des Systems ist mittels des Proofdruckers mit dem Aufheller ein Aufhellertestchart auf das Proofpapier aufdruckbar und beim Betrieb des Systems wird mittels des Proofdruckers unter Verwendung des Aufhellers ein solches Aufhellertestchart auf das Proofpapier aufgedruckt. Das Aufhellertestchart umfasst eine Mehrzahl von Messfeldern und wird mittels des Proofdruckers so ausgedruckt, dass die Messfelder unterschiedliche Flächendeckungen des Aufhellers aufweisen. Zur Ermittlung der Aufheller-Zielflächendeckung sind das Auflagenpapier einerseits sowie das Aufhellertestchart auf dem Proofpapier andererseits spektralfotometrisch vermessbar und werden beim Betrieb des Systems spektralfotometrisch vermessen. Dafür kann das System selbst entsprechende, grundsätzlich an sich bekannte Messeinrichtungen zur spektralfotometrischen Vermessung des Auflagenpapiers und des Aufhellertestcharts aufweisen. Alternativ kann auch vorgesehen sein, dass eine solche Messeinrichtung oder solche Messeinrichtungen nur temporär zu dem System gehören, zum Beispiel in Form eines tragbaren Messgeräts oder tragbarer Messgeräte, dessen bzw. deren Messergebnisse über eine Datenverbindung in einen Speicher des Systems, insbesondere einen Speicher der Verarbeitungseinheit, übertragen werden.

Bei einer nochmals weiteren Ausführungsform des Systems ist jedes Messfeld des Aufhellertestcharts zweimal vermessbar und wird beim Betrieb des Systems, insbesondere bei dessen Konfiguration, zweimal vermessen und zwar einmal mit UV-Einfluss und einmal ohne UV-Einfluss, wobei auf Basis der Messergebnisse beider Messungen für jedes Messfeld eine aufgrund der jeweiligen Flächendeckung des Aufhellers resultierende aufhellerinduzierte Emission ermittelbar ist und beim Betrieb des Systems ermittelt wird und wobei auf Basis einer für alle ausgewerteten Messfelder ermittelbaren aufhellerinduzierten Emission eine Look-Up-Funktion oder eine Look-Up-Tabelle ermittelbar ist und beim Betrieb des Systems ermittelt wird.

Bei einer nochmals weiteren Ausführungsform des Systems ist bei der spektralfotometrischen Vermessung des Auflagenpapiers auch das Auflagenpapier zweimal vermessbar und wird beim Betrieb des Systems zweimal vermessen und zwar einmal mit UV-Einfluss und einmal ohne UV-Einfluss, wobei auf Basis der Messergebnisse beider Messungen eine aufgrund von im Auflagenpapier enthaltenem Aufheller resultierende aufhellerinduzierte Emission als Ziel-Remission ermittelbar ist und beim Betrieb des Systems ermittelt wird und wobei anhand der Ziel-Remission unter Verwendung der Look-Up-Funktion oder der Look-Up-Tabelle die Aufheller-Zielflächendeckung ermittelbar ist und beim Betrieb des Systems ermittelt wird.

Bei einer bevorzugten Ausführungsform des Systems ist anhand der aufgrund der Messung ohne UV-Einfluss resultierenden Messergebnisse der spektralfotometrischen Vermessung des Auflagenpapiers sowie anhand einer spektralfotometrischen Vermessung eines mittels des Proofdruckers auf das Proofpapier aufdruckbaren Farbtestcharts eine Tinten-Zielflächendeckung ermittelbar und wird beim Betrieb des Systems ermittelt, wobei beim Drucken des Proofdrucks mittels des Proofdruckers die Tinten-Zielflächendeckung beim Drucken von Druckfarben berücksichtigbar ist und beim Betrieb des Systems berücksichtigt wird.

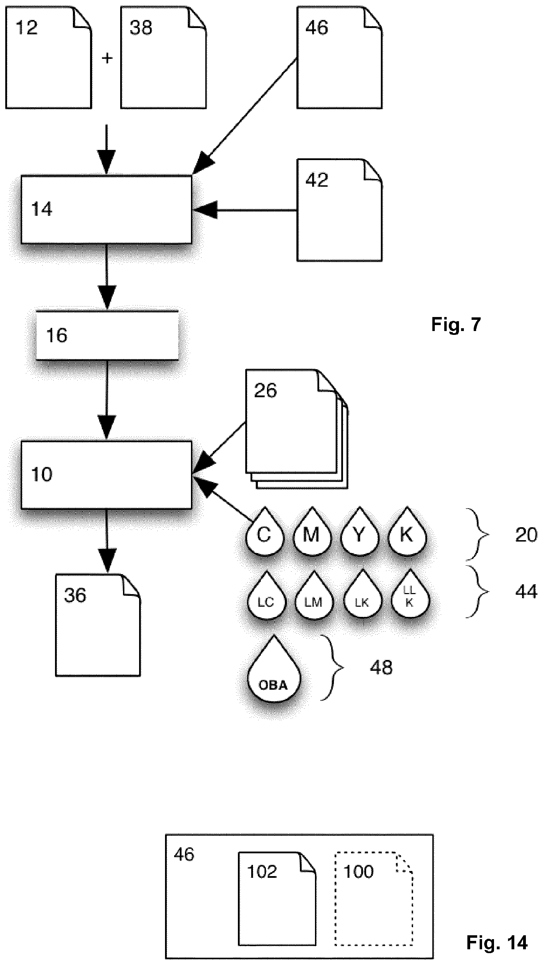

Das hier und im Folgenden beschriebene Verfahren zum Angleichen eines Proofpapiers an ein Auflagenpapier ist bevorzugt in Software oder in Soft- und Firmware implementiert und das Verfahren ist zur automatischen Ausführung bevorzugt in Form eines Computerprogramms realisiert. Das Computerprogramm ist zur Ausführung durch eine Verarbeitungseinheit (wie in Fig. 7 gezeigt) bestimmt. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Bediener oder einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Insoweit ist die hier vorgestellte Erfindung auch ein Computerprogramm mit Programmcodemitteln, um alle Schritte des gegenständlichen Verfahrens auszuführen, wenn das Computerprogramm im Rahmen eines Betriebs eines Systems zum Angleichen eines Proofpapiers an ein Auflagenpapier ausgeführt wird. Des Weiteren ist die Erfindung ein Computerprogramm mit Programmcodemitteln, insbesondere Programmcodeanweisungen, die auf einem computerlesbaren Datenträger gespeichert sind, um alle Schritte des gegenständlichen Verfahrens auszuführen, wenn das Computerprogramm in einen Speicher einer Verarbeitungseinheit eines Systems zum Angleichen eines Proofpapiers an ein Auflagenpapier geladen ist und im Rahmen eines Betriebs des Systems ausgeführt wird.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Ein spezieller Aspekt der Erfindung ist bei einem als Proofdrucker fungierenden Inkjet-Drucker eine Tinte zur Verwendung in dem hier und im Folgenden vorgestellten Verfahren. Diese ist zum Verdrucken mittels des Proofdruckers vorgesehen und weist mindestens einen Aufheller mit einer Konzentration von zum Beispiel 0,2% bis 40% auf sowie einen Carrier in einer Konzentration von zum Beispiel 0,2% - 40%. Der Carrier bewirkt zum einen eine Verstärkung der Aufhelleremission und zum anderen wird ein ungewollter sogenannter "Greening"-Effekt vermieden. Im Hinblick auf die resultierende Viskosität der Tinte sind die meisten wasserlöslichen und farblosen Polymer- und Cellulosederivate als Carrier geeignet.

Generell muss eine für einen Inkjet-Druck verwendbare Tintenformulierung eine Reihe von Eigenschaften aufweisen, um einen langfristig stabilen Ausdruck zu ermöglichen. Diese Eigenschaften hängen primär von der Viskosität, Löslichkeit von darin enthaltenen Additiven, der Kompatibilität der zusammengeführten Additive und der Fähigkeit der Tinte, in ein Aufzeichnungsmedium "wegzuschlagen" (in das Aufnahmesubstrat zwecks Trocknung einzuziehen) ab. Darüber hinaus sollen Tintenformulierungen eine gute Haftung auf einem Aufnahmesubstrat aufweisen. Für einen langfristig stabilen Druckprozess ist außerdem wesentlich, dass die Tinte langfristig nicht zu einer Verstopfung der Inkjet-Druckdüsen führt.

Typische Inkjet-Tinten für das Proofing und einen dabei verwendeten Inkjet-Drucker bestehen hauptsächlich aus Wasser, einer wassermischbaren organischen Flüssigkeit, einem Farbstoff mit einem Gehalt von mindestens 0,5 Gewichtsprozent, gegebenenfalls einem Netzmittel, gegebenenfalls einem Biozid, gegebenenfalls einem pH-Regulator und Kieselsäure-Partikel mit einem Gehalt von 0,1 bis 5 Gewichtsprozent und sind zum Beispiel aus der US 5,221,332 bekannt. Die US 5,925,178 beschreibt pigmentierte Inkjet-Tinten.

Die zu verwendende Tinte basiert vorzugsweise auf einer wässrigen Lösung, welche mindestens einen Typen von optischen Aufhellern mit einer Konzentration von 0,2% bis 40% beinhaltet. Die Tinte kann dabei jedoch auch auf anderen Lösungsmitteln basieren (z.B. Alkohol). Allgemein muss die Tinte im Inkjet-Verfahren verdruckbar sein.

Als optische Aufheller kommen vorzugsweise 1,3,5-Triazinylderivate der 4,4'-Diaminostilbenen zum Einsatz, welche sich primär durch zusätzliche Sulfosäuregruppen unterscheiden. Weitere mögliche optische Aufheller sind u.a. 4,4'-Distyrylbiphenyl. Dieser Aufhellertyp weist nach aktuellem Wissensstand eine höhere Lichtechtheit auf. Allgemein können jedoch beliebige optische Aufheller eingesetzt werden, welche in ihrem Anregungs- und Emissionsspektrum möglichst den im Markt für Papier eingesetzten optischen Aufhellern entsprechen.

Eine Forderung speziell an Proofsubstrate und Proofdrucke ist unter anderem eine hohe Lichtechtheit. Darunter wird die optische Stabilität von Substraten und darauf gedruckten Farben gegenüber UV-Strahlung verstanden. Speziell bei den hier vorgeschlagenen optischen Aufhellern findet eine sogenannte Photoisomerisation unter UV-Einfluss statt. Dabei wandeln sich zunächst in hoher Konzentration als aktive (im sichtbaren Bereich des Spektrums fluoreszierende) trans-Isomere vorliegende Aufheller unter UV-Einstrahlung spontan mit einer bestimmten Wahrscheinlichkeit in die inaktive cis-Isomer-Form um. Diese Umwandlung hängt vor allem von der relativen spektralen Verteilung einer gegebenen Lichtquelle sowie der Strahlungsintensität ab. Das trans-cis-Verhältnis ändert sich dabei zunächst sehr schnell (Minuten bis Stunden) und flacht dann zunehmend ab. Die Umwandlungsgeschwindigkeit kann vereinfacht als exponentielle Funktion beschrieben werden, welche sich mit fortschreitender Bestrahlungsdauer zunehmend einem metastabilen trans-cis-Verhältnis nähert. Vor dem Hintergrund des flächendeckungsvariablen Verdruckens einer optisch aufgehellten Tinte ist es nun zielführend, das trans-cis-Verhältnis von vornherein z.B. auf das für die Lichtart D50 günstige/gewünschte Verhältnis einzustellen. Dies kann z.B. durch eine Bestrahlung des Aufhellers oder einer den Aufheller umfassenden Tintenmischung vor dem Verdrucken erfolgen oder auch durch eine von vornherein chemisch synthetisierte trans-cis-Mischung. Entsprechend ist bei einer optionalen weiteren Ausführungsform des hier vorgeschlagenen Verfahrens vorgesehen, dass zum Erhalt eines vorgegeben oder vorgebbaren gewünschten Verhältnisses von aktiven trans-Isomeren und inaktiven cis-Isomeren im Aufheller der Anteil aktiver trans-Isomere im Aufheller durch Bestrahlung vor dem Verdrucken oder im Zusammenhang mit dem Verdrucken reduziert wird und/oder eine Synthetisierung (originäre Erzeugung der cis-und trans-Isomere in dem jeweils gewünschten Verhältnis) des Aufhellers mit einem dem gewünschten Verhältnis entsprechenden oder zumindest im Wesentlichen entsprechenden Verhältnis von aktiven trans-Isomeren und inaktiven cis-Isomeren erfolgt. Das zum Beispiel durch Bestrahlung mit einer vorgegebenen oder vorgebbaren Dauer bewirkte Anpassen/Einstellen eines gewünschten Verhältnisses von aktiven trans-Isomeren und inaktiven cis-Isomeren (trans-cis-Verhältnis) bewirkt gewissermaßen eine künstliche Alterung des Aufhellers. Die Bestrahlungsdauer beruht zum Beispiel auf Erfahrungswerten. Derzeit wird davon ausgegangen, dass eine Bestrahlungsdauer von fünf bis sechs Stunden sinnvoll ist. Die sonst erst nach dem Verdrucken des Aufhellers stattfindende Alterung in Form der Abnahme der aktiven trans-Isomere ist jetzt zum Zeitpunkt des Verdruckens bereits gegeben. Folglich altert der Aufheller durch (weitere) Abnahme der trans-Isomere nach dem Verdrucken nicht mehr oder nur noch in einem erheblich reduzierten Umfang. Der im Zusammenhang mit der gezielten Alterung des Aufhellers von vornherein gegebene Verlust der Emissionsintensität kann im vorgestellten Verfahren durch das Verdrucken einer höheren Aufhellerflächendeckung kompensiert werden. Die jeweils notwendige Aufhellerflächendeckung ergibt sich im Rahmen der hier und im Folgenden beschriebenen Ermittlung der Aufheller-Zielflächendeckung. Effektiv wird somit eine photoisomerisationsbedingte Alterung verringert bzw. die Lichtechtheit eines Proofdrucks erhöht.

Die mit der Anmeldung eingereichten Patentansprüche sind Formulierungsvorschläge ohne Präjudiz für die Erzielung weitergehenden Patentschutzes. Da speziell die Gegenstände der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen.

Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / des gegenständlichen Systems nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

Fig. 1    einen Druckprozessablauf unter Verwendung eines Inkjet-Druckers (Tintenstrahldrucker) als Drucker,

Fig. 2    ein Auflagenpapier und ein Proofpapier sowie deren visuelle und messtechnische Bewertung,

Fig. 3    eine grafische Veranschaulichung des mit der hier vorgestellten Neuerung angestrebten Ergebnisses, nämlich eine lichtartunabhängige, messtechnische und/oder visuelle Übereinstimmung des Proofpapiers mit dem Auflagenpapier,

Fig. 4    und

Fig. 5    eine grafische Veranschaulichung eines prinzipiellen, in der Praxis bekannten Prozessablaufs zum Erreichen der gewünschten Übereinstimmung von Proofpapier und Auflagenpapier,

Fig. 6    eine grafische Veranschaulichung der anstelle des gemäß Fig 4, Fig. 5 angestrebten Ergebnisses üblicherweise tatsächlich resultierenden Situation,

Fig. 7    eine schematisch vereinfachte Übersichtsdarstellung des hier vorgeschlagenen Verfahrens,

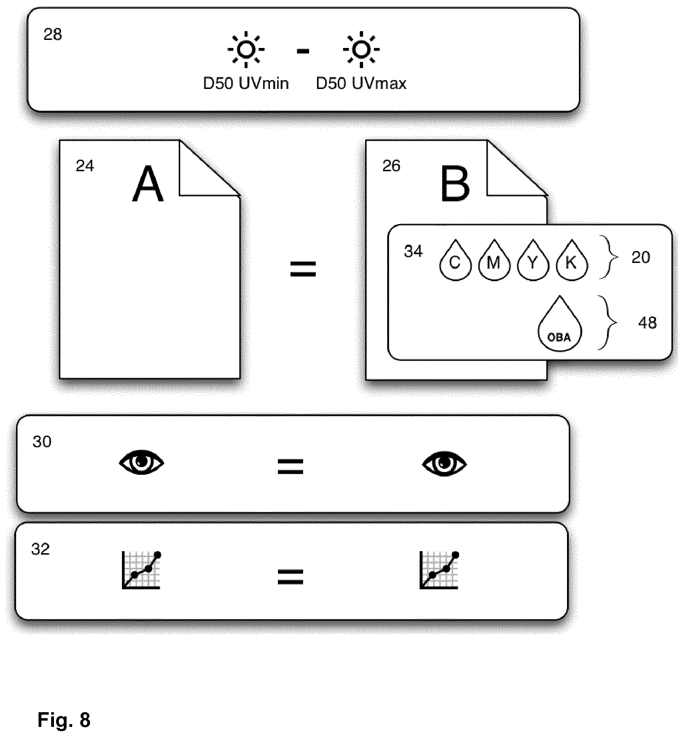

Fig. 8    eine Darstellung des Verfahrens gemäß Fig. 7 mit der Symbolik gemäß Fig. 2, Fig. 3, Fig. 4 und Fig. 6,

Fig. 9    eine schematisch vereinfachte Darstellung eines sich auf das Proofpapier beziehenden speziellen Aspekts des Verfahrens,

Fig. 10    verschiedene beispielhafte Testcharts,

Fig. 11    eine Look-Up-Funktion,

Fig. 12    eine schematisch vereinfachte Darstellung eines sich auf das Auflagenpapier sowie eines sich auf die Angleichung des Proofpapiers an das Auflagenpapier beziehenden speziellen Aspekts des Verfahrens,

Fig. 13    eine Verwendung der Look-Up-Funktion gemäß Fig. 11 im Rahmen der Angleichung des Proofpapiers an das Auflagenpapier,

Fig. 14    eine schematisch vereinfachte Darstellung, wie die Ergebnisse der Angleichung des Proofpapiers an das Auflagenpapier in das Verfahren gemäß Fig. 7 einfließen,

Fig. 15    eine schematisch vereinfachte Darstellung einer Arbeitsumgebung zur einfachen Verwendung der Ergebnisse gemäß Fig. 14,

Fig. 16    eine beispielhafte Betrachtung spektraler Remissionskurven als Ergebnis der Angleichung eines Proofpapiers an ein Auflagenpapier im langwelligen, sichtbaren Spektralbereich durch Einsatz konventioneller Tinten,

Fig. 17    das beispielhafte Ergebnis der weiteren Angleichung der spektralen Remissionscharakteristik desselben Proofpapiers im kurzwelligen, sichtbaren Spektralbereich durch Einsatz konventioneller und OBA-haltiger Tinten sowie

Fig. 18    ein beispielhaftes Aufhellermolekül in aktiver trans- und inaktiver cis-Form.

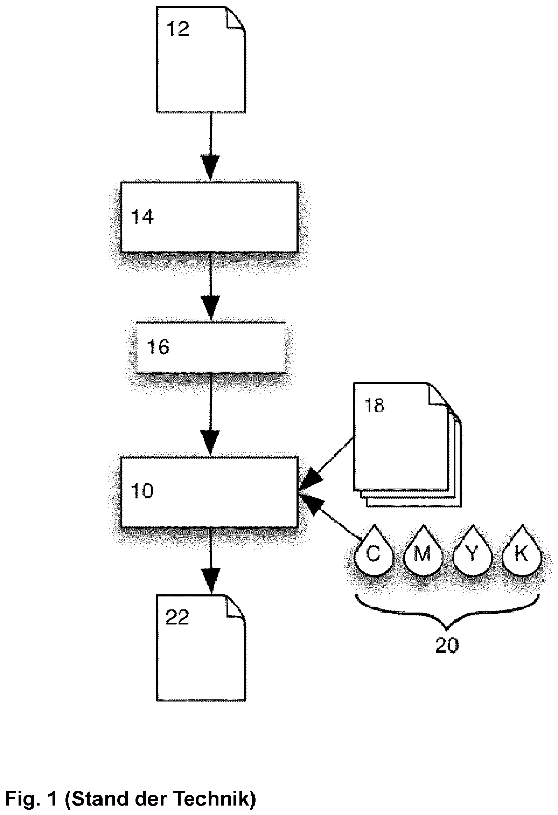

Die Darstellung in Figur 1 zeigt schematisch vereinfacht einen an sich bekannten Druckprozessablauf mit Verwendung eines Inkjet-Druckers 10. Dabei wird eine Druckdatei 12 mittels einer Verarbeitungseinheit 14, zum Beispiel einer Verarbeitungseinheit 14 in Form eines Computersystems, verarbeitet und es werden Ansteuerungsdaten 16 für den Inkjet-Drucker 10 erzeugt. Diese werden dem Inkjet-Drucker 10 zugeführt. Der Inkjet-Drucker 10 verarbeitet ein jeweiliges Aufzeichnungsmedium 18 zum Bedrucken sowie Tinten 20, insbesondere Standardtinten 20. Entsprechend der Ansteuerungsdaten 16 erzeugt der Drucker 10 mit den Tinten 20 auf dem Aufzeichnungsmedium 18, typischerweise Papier, den Druck 22.

Ein sogenannter Inkjet-Druck ist eine gut beschriebene Drucktechnologie, bei welcher das eigentliche Druckmotiv ohne Kontakt zwischen dem Drucker 10 und einem jeweiligen Aufzeichnungsmedium 18 sowie einem Aufnahmesubstrat des Aufzeichnungsmediums 18 erzeugt wird. Allgemein wird beim Inkjet-Druck ein aus einzelnen Farbtropfen bestehender Strahl mittels eines Druckkopfs definiert in Richtung auf das Aufzeichnungsmedium 18 ausgestoßen. Dabei entstehen aus den ausgestoßenen, winzigen Farbtröpfchen in grundsätzlich an sich bekannter Art und Weise (vgl. z.B. US 4,021,818 und US 4,313,124) einzelne Druckpunkte, welche wiederum das eigentliche zu druckende Motiv abbilden.

Der Druck 22 entsteht durch ein flächendeckungsvariables Übereinanderdrucken der Basisfarben der Druckindustrie. Bei diesen handelt es sich um die Farben Cyan, Magenta, Gelb und Schwarz. Vereinzelt werden auch Sonderfarben wie zum Beispiel light Cyan, light Magenta etc. eingesetzt. Das Motiv setzt sich aus Rasterpunkten unterschiedlicher Flächendeckung zusammen. Die Wahrnehmung des Motivs durch den Menschen basiert auf der subtraktiven und additiven Farbmischung und entsteht dabei durch das begrenzte Auflösungsvermögen des menschlichen Auges.

Das Ziel eines sogenannten Proofings ist es, zu einem möglichst frühen Zeitpunkt innerhalb des (Druck-)Produktionsprozesses ein jeweils gewünschtes endgültiges Druckergebnis zu simulieren. Im Rahmen des Proofings entsteht ein kurz als Proof bezeichneter sogenannter Proofdruck, welcher vor dem eigentlichen Auflagendruck dem Kunden zur Kontrolle vorgelegt werden kann und anhand dessen der Auflagendruck, also der spätere, eigentliche Druck, bewertet wird.

Aus ökonomischen und technologischen Gründen erfolgt der Druck des Proofs oft im Inkjetverfahren mittels eines dann als Proofdrucker fungierenden Inkjet-Druckers 10 und nicht mit dem zu simulierenden Druckverfahren des Auflagendrucks (z.B. Offsetdruck). Dies hat zur Folge, dass allein wegen unterschiedlicher Viskositäten der bei den verschiedenen Druckverfahren eingesetzten Druckfarben das für den Auflagendruck vorgesehene Auflagenpapier (Aufnahmesubstrat) nicht für das Proofing eingesetzt werden kann.

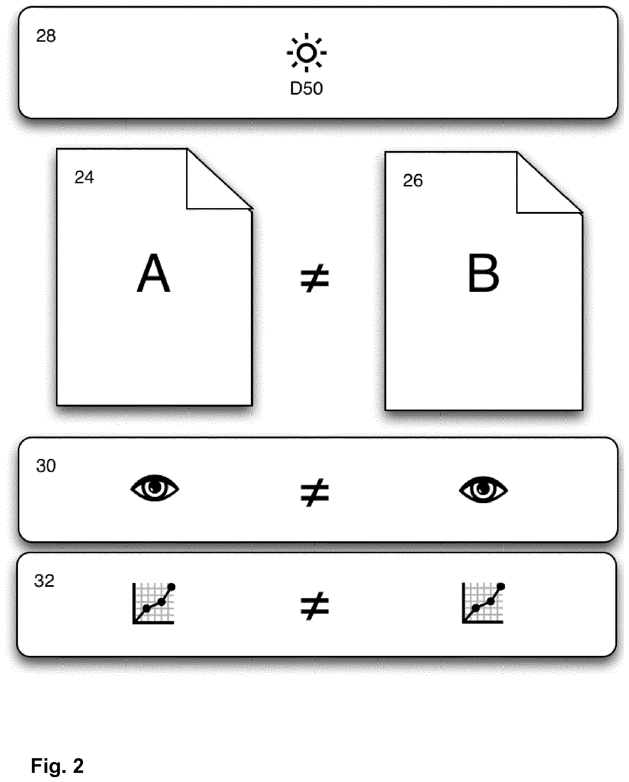

Als ideal gilt, wenn der Auflagendruck und der Proofdruck visuell und messtechnisch übereinstimmen. Oftmals ergibt sich aber eine Situation, wie sie schematisch vereinfacht in Figur 2 dargestellt ist.

Die Darstellung in Figur 2 zeigt die Bewertung eines Drucks auf einem für einen Auflagendruck vorgesehenen Auflagenpapier 24 (links) und einem für einen Proofdruck vorgesehenen Proofpapier 26 (rechts). Bei einer definierten Beleuchtung 28, zum Beispiel mit dem mittleren Tageslicht (Lichtart D50), ergeben sich mit dem Auflagenpapier 24 und dem Proofpapier 26 jeweils unterschiedliche, symbolisch mit "A" und "B" bezeichnete Remissionen (Wiederaussendung des nicht absorbierten Anteils des einfallenden Lichts). Dies führt sowohl bei der im Folgenden auch als visuelle Abmusterung 30 bezeichneten Betrachtung/optischen Prüfung durch einen menschlichen Betrachter/Prüfer zu einem unterschiedlichen visuellen Eindruck wie auch bei einer spektralfotometrischen Messung 32 mit einer dafür bestimmten, grundsätzlich an sich bekannten Messeinrichtung zu unterschiedlichen spektralfotometrischen Messergebnissen.

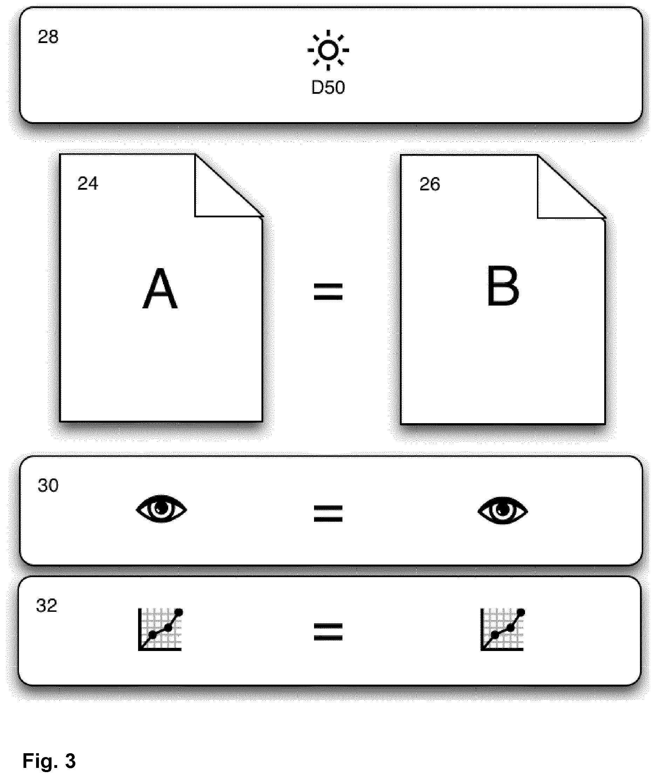

Die Darstellung in Figur 3 zeigt - mit gleicher Symbolik wie Figur 2 - das angestrebte Ziel, nämlich einen bei unterschiedlichen Aufnahmesubstraten 24, 26 (Auflagenpapier 24 einerseits und Proofpapier 26 andererseits) bei der Betrachtung 30 durch einen menschlichen Betrachter/Prüfer gleichen visuellen Eindruck 30 sowie gleichen oder zumindest im Wesentlichen gleichen Ergebnissen bei einer spektralfotometrischen Messung 32.

Theoretisch ist das Erreichen einer idealen Übereinstimmung der Druckergebnisse möglich, wenn folgende Randbedingungen eingehalten werden:

Das Emissionsspektrum und Anregungsspektrum der in den Auflagen- und Proofpapieren 24, 26 verwendeten optischen Aufheller ist identisch (dies ist in Fig. 3 durch das Gleichheitszeichen zwischen dem Auflagen- und dem Proofpapier 24, 26 gezeigt),

bei der visuellen Abmusterung 30 und bei der spektralfotometrischen Messung 32 ist das Emissionsspektrum der zur Beleuchtung 28 verwendeten Lichtquelle identisch (dies ist in Fig. 3 in Form einer gemeinsamen Lichtquelle 28 für die visuelle Abmusterung 30 und die spektralfotometrische Messung 32 gezeigt),

speziell die UV-Emission der für die Beleuchtung 28 verwendeten Lichtquellen stimmt überein, damit eine gleichartige Anregung der optischen Aufheller in den Aufnahmesubstraten der Auflagen- und Proofpapiere 24, 26 gegeben ist (auch dies ist in Fig. 3 in Form einer gemeinsamen Lichtquelle 28 gezeigt).

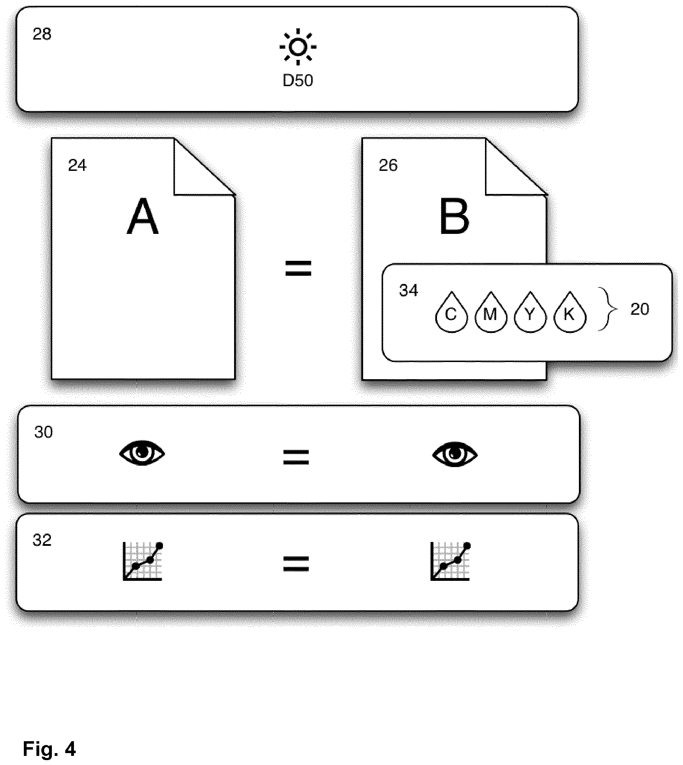

Klassischerweise wird das Remissionssspektrum des Proofsubstrats 26 (Remission B) an das Remissionsspektrum des Auflagenpapiers 24 (Remission A) durch Aufdrucken 34 (Fig. 4) einer Farbschicht auf das Proofpapier 26 angeglichen. Die Farbschicht wird mittels des Inkjet-Druckers 10 mit konventionellen Inkjet-Grundfarben (Cyan, Magenta, Gelb und Schwarz) 20 gedruckt, wobei ggf. optional zur Verbesserung der Druckqualität light-Abstufungen der Grundfarben zum Einsatz kommen. Durch das Aufdrucken zumindest einer derartigen Farbschicht wird eine Annäherung, idealerweise eine Angleichung des Weißpunkts des Proofpapiers 26 an den Weißpunkt des Auflagenpapiers 24 erreicht.

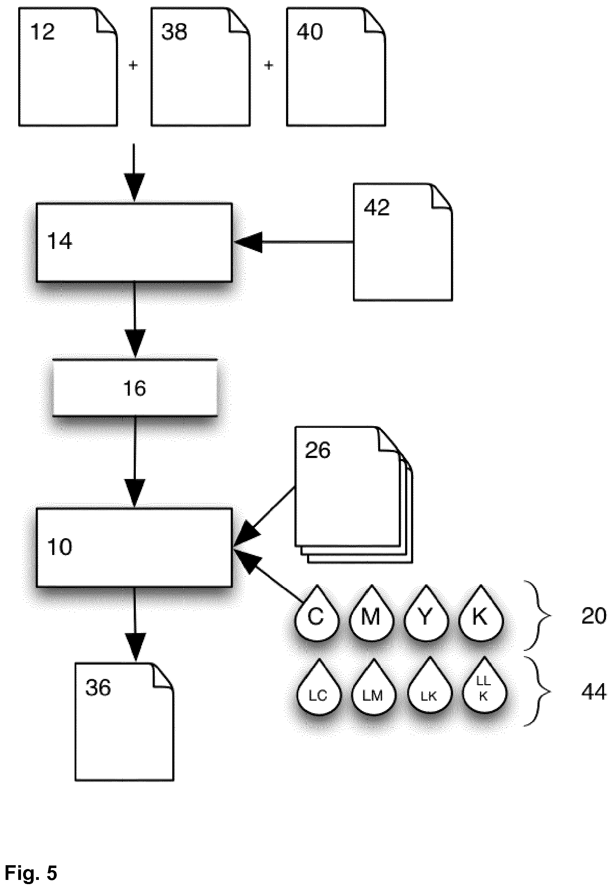

Die Darstellungen in Figur 4 und Figur 5 veranschaulichen dies grafisch und die Darstellung in Figur 5 zeigt ein solches (ideales) Verfahren beim Erstellen eines Proofdrucks 36 schematisch vereinfacht und mit derselben Symbolik wie in Figur 1.

Die Verarbeitungseinheit 14 verarbeitet jetzt nicht nur die Druckdatei 12, sondern zusätzlich auch eine elektronisch verarbeitbare Kodierung spezifischer Druckbedingungen 38 sowie eine elektronisch verarbeitbare Kodierung des Weißpunkts 40 des Auflagenpapiers 24 (Figur 4). Des Weiteren verarbeitet die Verarbeitungseinheit 14 auch für den jeweiligen Inkjet-Drucker 10 und das verwendete Proofpapier 26 spezifische Kalibrierungsdaten 42. Aus deren Verarbeitung mittels der Verarbeitungseinheit 14 resultieren die Ansteuerungsdaten 16 für den Inkjet-Drucker 10. Dieser verwendet das jeweilige Proofpapier 26 sowie Standard-Inkjetfarben 20 sowie optional Inkjetfarben 44 mit light-Abstufungen der Grundfarben.

In der Praxis wird die in der Darstellung in Figur 4 gezeigte und nur im Idealfall erreichte Übereinstimmung vor allem aufgrund stark unterschiedlicher Aufhelleranteile in den Proof-und Auflagenpapieren 26, 24 nicht erreicht. Insgesamt spielen folgende Faktoren eine Rolle:

unterschiedliche UV-Anteile der Lichtquellen zur Beleuchtung einerseits des Proofpapiers 26 und andererseits des Auflagenpapiers 24,

unterschiedliche Aufhelleremissionen der Aufnahmesubstrate des Proofpapiers 26 und des Auflagenpapiers 24 sowie

unterschiedliche Beleuchtung bei der visuellen Abmusterung 30 und bei der Messung 32.

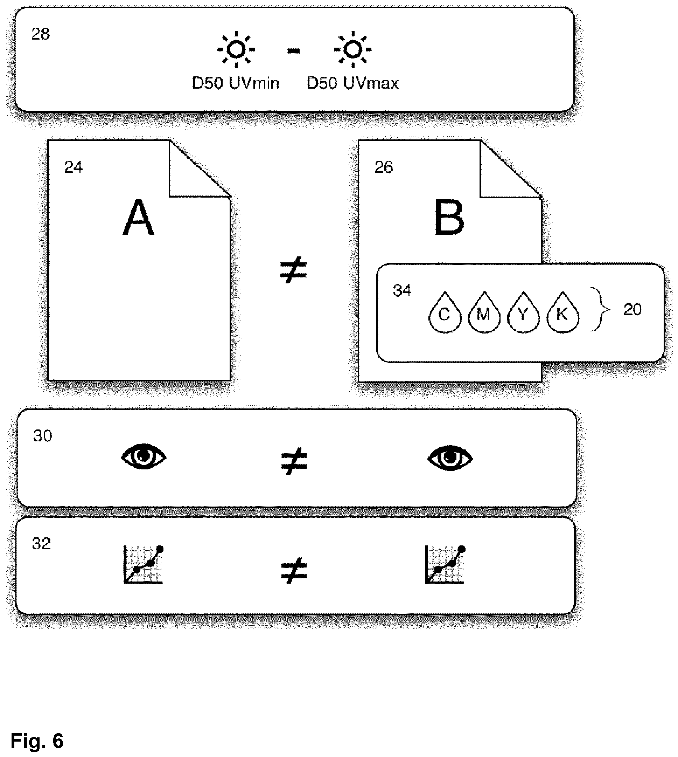

Anstelle der in Figur 4 gezeigten Soll-Situation ergibt sich vielmehr eine Ist-Situation entsprechend der Darstellung in Figur 6. Zwar ist bei der spektralfotometrischen Messung 32 in der normalen Druckprozesskontrolle - üblicherweise zum Beispiel unter einer sogenannten Messbedingung M2 (Beleuchtung mit dem mittleren Tageslicht D50 nach ISO 3664:2009 plus UV-Cut-Filter) - eine ausreichende Übereinstimmung erreichbar. Weil aber bei der Messung 32 und der verwendeten Lichtquelle des Messgerätes der Aufheller anders angeregt wird als bei der visuellen Abmusterung 30 von der dort verwendeten Lichtquelle, können sich Abweichungen als Fehler durch den Druckprozess fortpflanzen, die eine Nichteinhaltung von Qualitäts- und Abnahmeparametern zur Folge haben. Dies gilt besonders, weil bezüglich der in der Druckindustrie üblicherweise verwendeten Lichtart D50 gemäß der ISO 3664:2009 Abweichungen im UV-Anteil von 53% bis 148% gegenüber dem UV-Anteil der Lichtart D50 als normgerecht gelten. In der Praxis verwendete Beleuchtungskabinen und Messgeräte können fertigungsbedingt über die gesamte Spannbreite der Toleranz streuen. Dies ist in der Darstellung in Figur 6 durch die Texte "D50 UVmin" und "D50 UVmax" veranschaulicht.

Eine theoretische Möglichkeit zur Lösung der verbleibenden Abweichungen zwischen den Ergebnissen der visuellen Abmusterung 30 und der Messung 32 besteht in einer Verwendung gezielt abgestimmter Proofsubstrate 26, die in ihrem Emissionsverhalten dem der Auflagensubstrate 24 entsprechen. Aufgrund des resultierenden enormen Handlings- und Lagerhaltungsaufwands stellt dies allerdings keine wirtschaftlich sinnvolle Möglichkeit dar.

Die Darstellung in Figur 7 stellt nunmehr - schematisch vereinfacht wie Figur 1 und Figur 5 - das hier zur Vermeidung der oben skizzierten Abweichungen vorgeschlagene Verfahren dar. Dieses ist eine Erweiterung gegenüber dem in Figur 5 und der zugehörigen Erläuterung dargestellten bzw. beschriebenen Verfahren und auf beides wird zur Vermeidung von Wiederholungen ausdrücklich Bezug genommen. Als Proofdrucker 10 kommt bevorzugt ein Inkjet-Drucker 10 zur Anwendung und die weitere Beschreibung wird exemplarisch anhand eines als Proofdrucker 10 fungierenden Inkjet-Druckers 10 fortgesetzt.

Bei dem neuen Verfahren werden mittels der Verarbeitungseinheit 14 elektronisch verarbeitbare Substratangleichungsdaten 46 verarbeitet. Zusammen mit den bereits bisher (Verfahren gemäß Fig. 5) berücksichtigten Daten der Druckdatei 12, der Druckbedingungen 38 und der Kalibrierungsdaten 42 erzeugt die Verarbeitungseinheit 14 daraus Ansteuerungsdaten 16 für den Proofdrucker/Inkjet-Drucker 10. Die bei der Darstellung in Figur 5 gezeigte elektronisch verarbeitbare Kodierung des Weißpunkts 40 und damit die bisherige konventionelle Weißpunktanpassung wird nicht mehr benötigt.

Der Proofdrucker 10 verwendet aufgrund der Ansteuerungsdaten 16 jetzt nicht nur die Standard-Inkjetfarben 20 sowie optional Inkjetfarben 44 mit light-Abstufungen der Grundfarben, sondern auch einen mittels des als Proofdrucker 10 fungierenden Inkjet-Druckers 10 auf das Proofpapier 26 auftragbaren Aufheller 48, insbesondere einen Aufheller in Form einer aufhellerhaltigen OBA-Tinte. Durch die zusätzliche Verwendung des Aufhellers 48 und durch Bedruckung des Proofpapiers 26 auch mit dem Aufheller 48 wird die aufhellerinduzierte Emission des so bedruckten Proofpapiers 26 an die Emission des Auflagenpapiers 24 angepasst. Die Anpassung erfolgt dabei in Form einer Anpassung der Flächendeckung des mittels des Inkjet-Druckers 10 auf das Proofpapier 26 aufgebrachten Aufhellers 48 und aufgrund der Substratangleichungsdaten 46 ergibt sich die beim Bedrucken des Proofpapiers 26 notwendige Flächendeckung des mittels des Inkjet-Druckers 10 aufgetragenen Aufhellers 48. Das Aufdrucken des Aufhellers 48 auf das Proofpapier 26 erfolgt bevorzugt gemeinsam mit dem Aufdrucken der Tinte 20; 20, 44. Alternativ kommt auch in Betracht, zuerst die Tinte 20; 20, 44 aufzudrucken und erst danach den Aufheller 48 aufzudrucken oder erst den Aufheller 48 und danach die Tinte 20; 20, 44 aufzudrucken.

Dadurch wird erreicht, dass Proof- und Auflagendruck auch bei zunächst unterschiedlichen Remissionen der jeweils verwendeten Papiere 26, 24 unabhängig von der Art der Beleuchtung 28 sowohl messtechnisch 32 wie auch visuell 30 gleich sind. Bedingung ist, dass während jedes Vergleichs in sich konstante Bedingungen vorliegen, also dieselbe Lichtquelle 28 beide Proben (Auflagenpapier 24 und Proofpapier 26) beleuchtet und dasselbe Messgerät für die Vermessung beider Proben verwendet wird. Da das Remissionsverhalten beider Papiere 24, 26 mittels des auf das Proofpapier 26 aufgebrachten Aufhellers 48 aneinander angeglichen ist, verhalten sie sich auch bei unterschiedlicher Beleuchtung bei der visuellen Abmusterung 30 und der Messung 32 gleich. Tritt bei korrekt gedrucktem Proof jetzt eine Abweichung zum Auflagendruck auf, kann von einem Fehler im Druckprozess selbst ausgegangen werden. Farbabweichungen aufgrund von optischen Aufhellern können demgegenüber ausgeschlossen werden.

Zur Ermittlung der für die Anpassung des Proofpapiers 26 an das Auflagenpapier 24 notwendigen Flächendeckung des mittels des Proofdruckers 10, insbesondere des mittels des Inkjet-Druckers 10 als Proofdrucker 10, auf das Proofpapier 26 aufgebrachten Aufhellers 48 ist eine Messung der Aufhelleremission im Auflagenpapier 24 (Zielmedium) und im Proofpapier 26 notwendig.

Papiere und Druckerzeugnisse werden typischerweise spektral gemessen. Aus den Spektraldaten werden Koordinaten im CIE-Lab-Farbraum (CIE-Lab-Daten) berechnet. Das Vorgehen beim spektralen Messen und bei der Umrechnung der Messergebnisse in CIE-Lab-Daten ist grundsätzlich an sich bekannt und zum Beispiel in dem Fachbuch "Handbuch der Printmedien", Springer Berlin Heidelberg, ISBN 978-3-540-66941-8, beschrieben.

Unterschieden wird zumindest zwischen den folgenden Messbedingungen:

M0 = Beleuchtung mit der Lichtart A (Glühlampe),
M1 = Beleuchtung mit dem mittleren Tageslicht D50 nach ISO 3664:2009 (gefordert vom Fogra 51/52-Druckstandard) sowie
M2 = Beleuchtung mit dem mittleren Tageslicht D50 nach ISO 3664:2009 plus UV-Cut-Filter.

Zur Messung der Aufhelleremission im Auflagenpapier 24 und im Proofpapier 26 kommen eine kombinierte Messung einerseits unter einer ersten Messbedingung, zum Beispiel eine Messung ohne UV-Cut-Filter, insbesondere eine Messung unter der Messbedingung M1, und andererseits unter einer zweiten Messbedingung, zum Beispiel eine Messung mit UV-Cut-Filter, insbesondere eine Messung unter der Messbedingung M2, oder alternativ eine kombinierte Messung mit zwei grundsätzlich beliebigen, unterschiedlichen Lichtarten in Betracht, zum Beispiel mit Tageslicht oder einem Tageslichtäquivalent (Lichtart D50) einerseits und einer Glühlampe oder einer Lichtquelle mit dem Emissionsspektrum einer Glühlampe andererseits. Die Differenz zweier derartiger Messungen ist ein Maß für die Wirkung/ Emission des optischen Aufhellers. Dabei wird stets eine Messung mit aufhellerinduzierter Emission (z.B. ohne UV-Cut-Filter und z.B. mit Normlichtart D50) mit einer Messung ohne aufhellerinduzierte Emission (z.B. mit UV-Cut-Filter oder z.B. mit Glühlampe nach Lichtart A) verglichen. Die Messungen erfolgen idealerweise mit einem Spektralfotometer und grundsätzlich eignet sich für eine solche Messung ein handelsübliches Spektralfotometer. Allgemein ist jedes Gerät geeignet, welches eine Aufnahme von Spektraldaten für den sichtbaren Bereich ermöglicht.

Die Bestimmung der aufhellerinduzierten Emission kann zum Beispiel auf spektrale Werte oder farbmetrische Werte angewendet werden. Bei einer Betrachtung spektraler Werte kommt zum Beispiel eine Ermittlung einer Differenz der Flächenintegrale unter einer jeweiligen Spektralwertkurve in Betracht. Alternativ kommt bei einer Messung zum Beispiel mit der Lichtart D50 eine Betrachtung einer Differenz einer Remission einer einzelnen Wellenlänge im Emissionsbereich des Aufhellers und einer Remission einer anderen, nicht durch den Aufheller beeinflussten Wellenlänge (Peak Differenz; z.B. 440nm zu 780nm) in Betracht.

Bei einer Betrachtung farbmetrischer Werte kommt zum Beispiel ein Vergleich der Blauwirkung in Betracht, insbesondere durch Bildung eines Δb*-Wertes der CIE-Lab-Koordinaten zwischen den beiden Messungen oder alternativ sind vergleichbare farbmetrische Werte möglich, z.B. LCH, XYZ, HSB.

Für die Verarbeitung der aufhellerinduzierten Emission im Rahmen eines Druckprozesses zum Erstellen eines Proofdrucks wird eine elektronisch verarbeitbare Kodierung der aufhellerinduzierten Emission benötigt. Im Folgenden werden Look-Up-Daten als eine solche elektronisch verarbeitbare Kodierung vorgeschlagen.

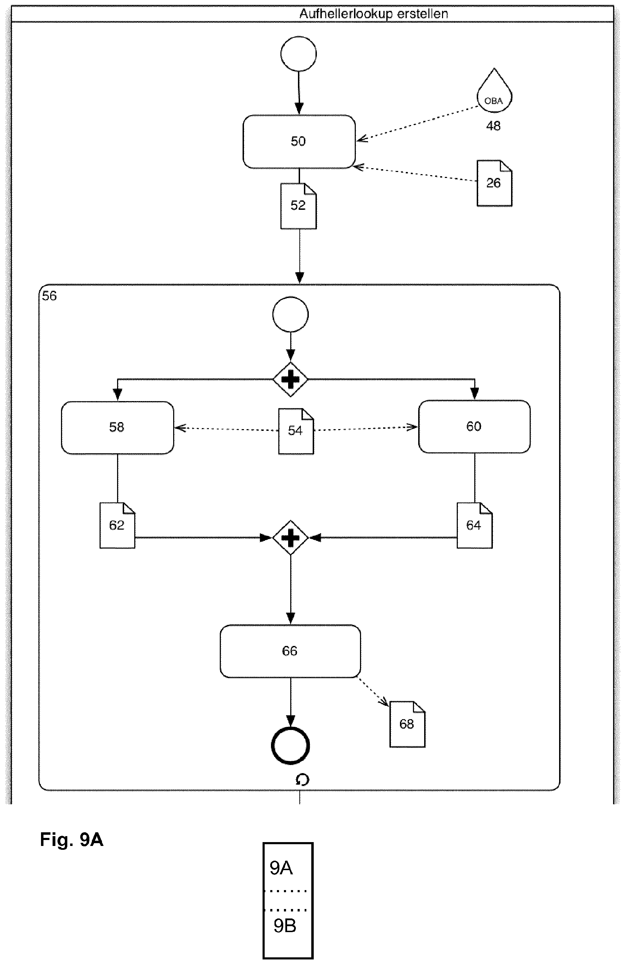

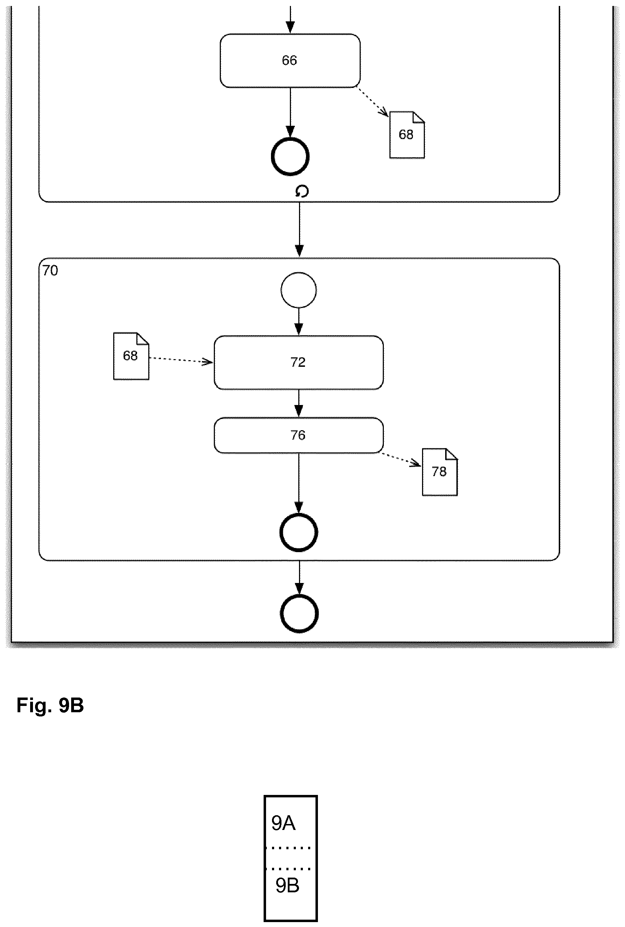

Die Generierung solcher Look-Up-Daten wird anhand der Darstellung in Figur 9 (Fig. 9A zusammen mit Fig. 9B) erläutert. Diese zeigt ein Verfahren zum Ermitteln solcher Daten schematisch vereinfacht in Form eines Flussdiagramms (BPMN-Modell; Business Process Model and Notation). Dabei wird die Remissionscharakteristik einer Kombination von Proofpapier 26 und mittels des Inkjet-Druckers 10 aufgebrachtem Aufheller 48 bei verschiedenen Flächendeckungen bestimmt. Mittels dabei ermittelter Werte ergibt sich eine Korrelation zwischen einer jeweiligen Flächendeckung des Aufhellers 48 und der zu erwartenden aufhellerinduzierten Emission. Die ermittelten Werte sind die Look-Up-Daten oder die Basis für Look-Up-Daten.

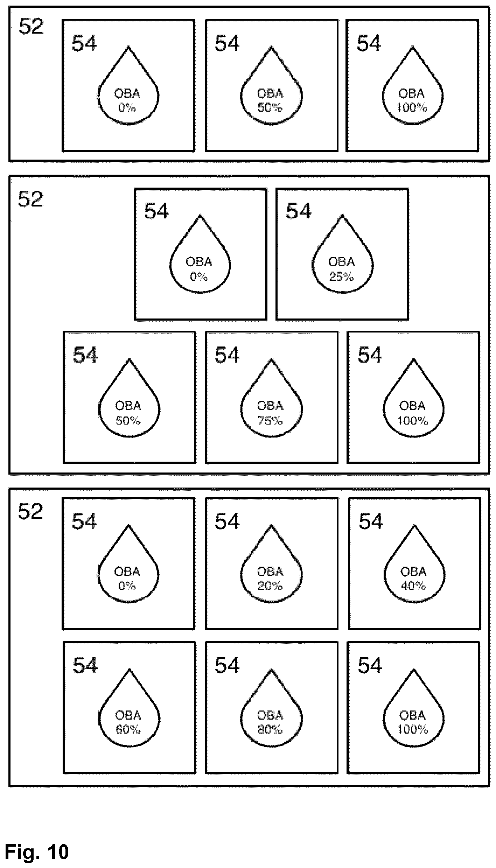

In einem ersten Schritt 50 wird zunächst mittels des Inkjet-Druckers 10 auf ein Proofpapier 26 ein Testchart 52 mit einer vorgegebenen oder vorgebbaren Anzahl von Messfeldern 54 (Fig. 10) erzeugt. Jedes Messfeld 54 wird mittels des Inkjet-Druckers 10 durch Aufdrucken eines Aufhellers 48 auf das Proofpapier 26 gedruckt, insbesondere durch Aufdrucken einer OBA-Tinte als Aufheller 48. Das Testchart 52 wird im Folgenden entsprechend als Aufhellertestchart 52 bezeichnet. Die Messfelder 54 unterscheiden sich durch eine unterschiedliche Flächendeckung des Aufhellers 48 voneinander. Die Darstellung in Figur 10 zeigt - lediglich beispielhaft - einzelne denkbare Aufhellertestcharts 52 mit davon umfassten Messfeldern 54. Auch die dort gezeigte Abstufung der Flächendeckung (0%, 50%, 100%; 0%, 25%, 50%, 75%, 100% und 0%, 20%, 40%, 60%, 80%, 100%) ist lediglich beispielhaft zu verstehen und ebenso sind andere Abstufungen, auch nicht-lineare Abstufungen sowie Abstufungen, die mit einer Flächendeckung größer als 0% beginnen und/oder mit einer Flächendeckung kleiner als 100% enden, denkbar. Allgemein wird beim Drucken eines Aufhellertestcharts 52 und der davon umfassten Messfelder 54 die Flächendeckung mit einer vorgegebenen oder vorgebbaren Schrittweite, ausgehend von einer minimalen Flächendeckung, zum Beispiel 0%, bis zum Erreichen einer maximalen Flächendeckung, zum Beispiel 100%, erhöht.

Nach dem Drucken des Aufhellertestcharts 52 wird im Rahmen einer Auswertung der davon umfassten Messfelder 54 (Messfeldauswertung 56; Fig. 9A) jedes Messfeld 54 zweimal spektralfotometrisch ausgemessen und zwar einmal im Rahmen einer ersten Messung 58 unter vorgegebenen oder vorgebbaren ersten Messbedingungen, zum Beispiel der Messbedingung M1, und einmal im Rahmen einer zweiten Messung 60 unter von den ersten Messbedingungen unterschiedlichen, vorgegebenen oder vorgebbaren zweiten Messbedingungen, zum Beispiel der Messbedingung M2. Aufgrund der ersten Messung 58 resultieren erste Spektralwerte 62 und aufgrund der zweiten Messung 60 resultieren zweite Spektralwerte 64. Eine Differenz der Spektralwerte ergibt eine jeweilige aufhellerinduzierte Emission 66 $\Delta E_s$

$$\Delta E_S = \sum_{\lambda} \left( \beta_{M1}(\lambda) - \beta_{M2}(\lambda) \right)^2 \, , \qquad\qquad (1)$$

wobei $\beta_{M1}(\lambda)$ ein bei der ersten Messung 58 (erste Messbedingung, insbesondere Messbedingung M1) bei der Wellen-länge $\lambda$ ermittelter Spektralwert und entsprechend $\beta_{M2}(\lambda)$ ein bei der zweiten Messung 60 (zweite Messbedingung, insbesondere Messbedingung M2) bei der Wellenlänge $\lambda$ ermittelter Spektralwert ist. Weitere Details zu einer solchen Auswertung der Messdaten finden sich in der Dissertation von Michael Dattner mit dem Titel "Spektrales Farbvorhersagemodell für den Rasterdruck auf Basis der wellenlängenabhängigen Flächendeckung", zu beziehen über die Universitätsbibliothek der Bergischen Universität Wuppertal (urn:nbn:de:hbz:468-20110519-095444-2).

Das so für die jeweilige Flächendeckung ermittelte Ergebnis wird abgespeichert 68. Die Messfeldauswertung 56 wird entsprechend der Anzahl der von dem Aufhellertestchart 52 umfassten Messfelder 54 wiederholt, bis alle Messfelder 54 ausgewertet sind und der für jedes Messfeld 54 und dessen Flächendeckung resultierende Wert - die jeweilige aufhellerinduzierte Emission 66 $\Delta E_s$ - abgespeichert 68 ist.

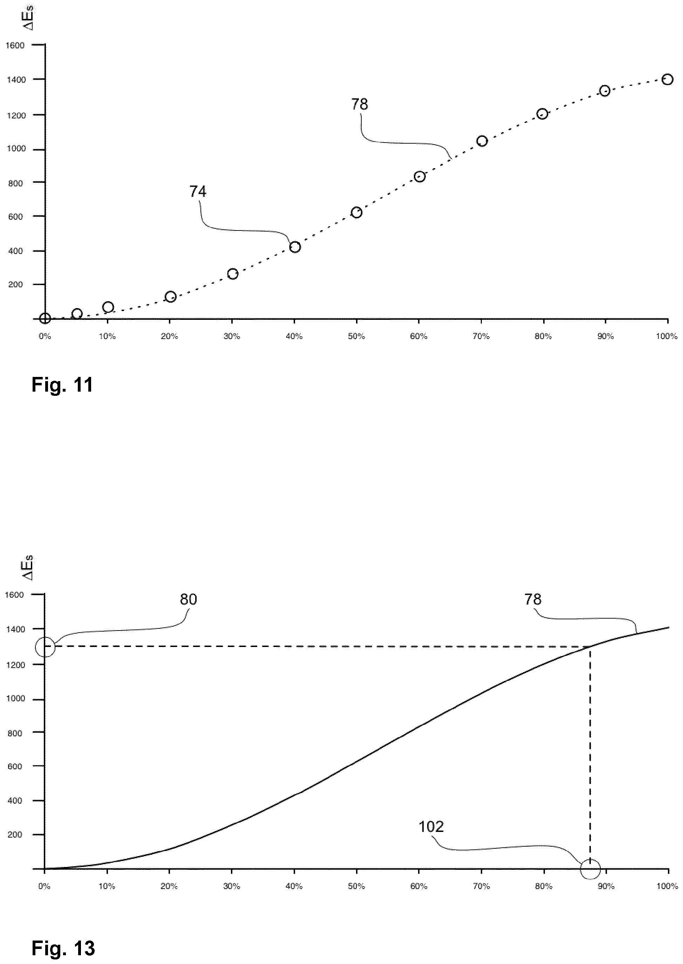

Nach Ermittlung aller aufhellerinduzierten Emissionen 66 $\Delta E_s$ für die jeweils vorgesehenen Flächendeckungsgrade wird mittels einer Look-Up-Funktionserstellung 70 (Fig. 9B) die Look-Up-Funktion erstellt. Dafür werden die gespeicherten 68 aufhellerinduzierten Emissionen 66 $\Delta E_s$ über der Flächendeckung aufgetragen (Schritt 72) und es ergibt sich eine Punkteschar, wie dies exemplarisch in der Darstellung in Figur 11 gezeigt ist. Auf der Abszisse des Koordinatensystems in Figur 11 ist die Flächendeckung des Aufhellers 48 in Prozent aufgetragen und auf der Ordinate die aufhellerinduzierte Emission. Jeder Punkt 74 ergibt sich dabei aufgrund einer jeweiligen aufhellerinduzierten Emission 66 $\Delta E_s$ über dem jeweiligen Flächendeckungsgrad, für den diese ermittelt wurde. Durch die Gesamtheit der Punkte 74 wird mittels einer Polynombildung 76 ein Polynom 78 gelegt. Das Polynom 78 (Fig. 9B; Fig. 13), also eine mathematische Beschreibung der Abhängigkeit der aufhellerinduzierten Emission 66 $\Delta E_s$ vom Flächendeckungsgrad des Aufhellers 48, ist die gesuchte Look-Up-Funktion 78. Alternativ kann als Look-Up-Funktion 78 auch eine Tabelle (Look-Up-Tabelle) verwendet werden, in welcher die aufhellerinduzierten Emissionen 66 $\Delta E_s$ paarweise mit dem jeweils zugrunde liegenden Flächendeckungsgrad des Aufhellers 48 zusammengefasst sind, wobei Zwischenwerte in grundsätzlich an sich bekannter Art und Weise mittels Interpolation ermittelt werden.

Das Ergebnis zeigt für ein jeweiliges Proofpapier 26 und eine jeweilige Tinte 20 - ggf. Tinten 20, 44 - wie sich die Aufhelleremission mit zunehmender Flächendeckung des mittels des Proofdruckers 10 auf das Proofpapier 26 aufgebrachten Aufhellers 48 verändert. Eine einmal ermittelte Look-Up-Funktion 78 kann für eine feststehende Kombination von Proofpapier 26 und Tinte 20; 20, 44 immer wieder verwendet werden.

Darüber hinaus kann es sinnvoll sein, eine jeweilige individuelle Absorption von Inkjet-Farben 20; 20, 44 zu berücksichtigen, da sich diese nicht nur farbabhängig (z.B. Cyan vs. Magenta), sondern bei gleicher farbgebender Wirkung im sichtbaren Bereich des Spektrums (Magenta vs. Magenta) auch zwischen zwei unterschiedlichen Druckverfahren (und damit Farbmitteln) unterscheiden kann. Dazu sind auf dem Auflagenpapier 24 und dem Proofpapier 26 Drucke mit zusätzlichen Farben neben den oben erwähnten Primärfarben notwendig. Messungen in Bezug auf solche zusätzlichen Drucke erfolgen analog nach dem oben beschriebenen Vorgehen. Diese Messungen erfolgen jedoch auf bereits aufgehellten und angeglichenen Bereichen auf dem Proofpapier 26.

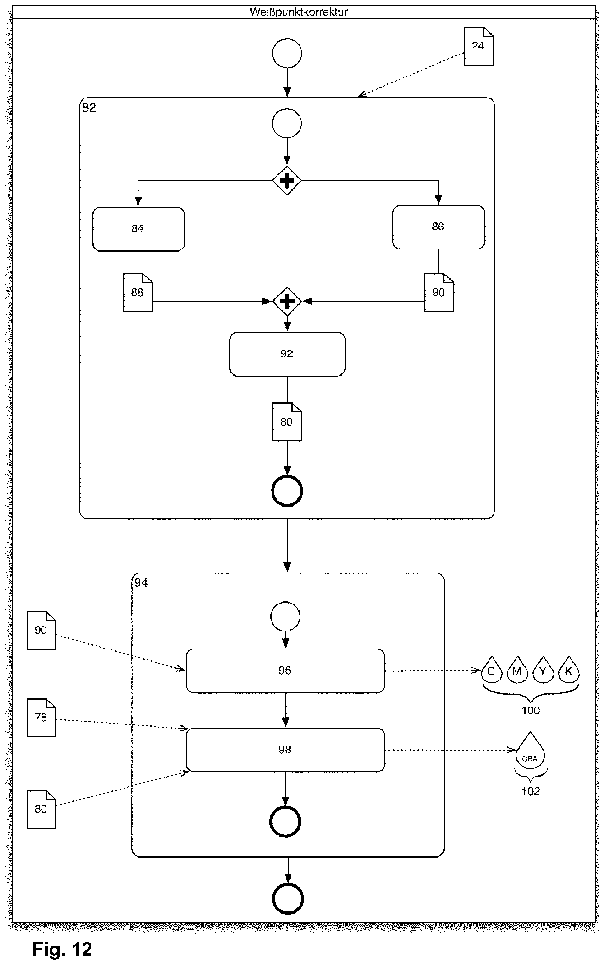

Eine Angleichung des Proofpapiers 26 an das Auflagenpapier 24 erfolgt gemäß dem in Figur 12 schematisch vereinfacht in Form eines Flussdiagramms (BPMN-Modell; Business Process Model and Notation) gezeigten Verfahrens. Zur korrekten Simulation eines Auflagenpapiers 24 durch ein jeweiliges Proofpapier 26 zusammen mit einem darauf aufgedruckten Aufheller 48 muss das Auflagenpapier 24 spektralfotometrisch vermessen werden und dessen Remission - im Folgenden zur Unterscheidung als Ziel-Remission 80 bezeichnet - ermittelt werden.

Im Rahmen einer Zielremissionsermittlung 82 wird das Auflagenpapier 24 unter Wirkung unterschiedlicher Messbedingungen, zum Beispiel der ersten Messbedingung M1 sowie der zweiten Messbedingung M2, spektralfotometrisch vermessen (erste Messung 84; zweite Messung 86) und es wird jeweils die gesamte sichtbare Remission erfasst. Die Messbedingungen können den Messbedingungen bei der Auswertung der Messfelder 54 des Aufhellertestcharts 52 entsprechen. Dies ist allerdings keine Notwendigkeit und es kommt vielmehr nur darauf an, dass im Rahmen der Zielremissionsermittlung 82 zwei unterschiedliche Messbedingungen verwendet werden, von denen zumindest eine den im Auflagenpapier 24 enthaltenen Aufheller nicht oder allenfalls wenig anregt.

Hier wird davon ausgegangen, dass die erste Messung 84 unter UV-Einfluss erfolgt. Demgegenüber erfolgt die zweite Messung 86 ohne UV-Einfluss, zum Beispiel indem bei der zweiten Messung 86 ein UV-Cut-Filter verwendet wird, während ein solcher UV-Cut-Filter bei der ersten Messung 84 nicht zum Einsatz kommt. Bei der zweiten Messung 86 hat der im Auflagenpapier 24 enthaltene Aufheller dann keine Auswirkung auf die gemessene Remission. Als Ergebnis der ersten Messung 84 resultieren erste Spektralwerte 88 und als Ergebnis der zweiten Messung 86 resultieren zweite Spektralwerte 90, welche in einem anschließenden Schritt 92 verarbeitet werden. In diesem Schritt 92 wird - zum Beispiel in Form einer Differenz der Spektralwerte 88, 90 gemäß Gleichung (1) - die Emission des im Auflagenpapier 24 enthaltenen Aufhellers ermittelt und eine aufhellerinduzierte Emission $\Delta E_s$ des Auflagenpapiers 24 bestimmt. Das Ergebnis ist die Aufhelleremission des Auflagenpapiers 24, also die gesuchte Ziel-Remission 80.

Zur Angleichung des Proofpapiers 26 an das Auflagenpapier 24 wird im Rahmen einer Substratangleichung 94 (Fig. 12) die für das Proofpapier 26 notwendige Flächendeckung der Tinten 20 - ggf. der Tinten 20, 44 - sowie die für das Proofpapier 26 notwendige Flächendeckung des Aufhellers 48 ermittelt 96, 98.

Ob im Rahmen der Substratangleichung 94 zunächst die Ermittlung 96 der für das Proofpapier 26 notwendigen Flächendeckung der Tinten 20 oder zunächst die Ermittlung 98 der für das Proofpapier 26 notwendigen Flächendeckung des Aufhellers 48 ermittelt wird, ist beliebig, vorzugsweise wird zuerst die Tinten-Zielflächendeckung (Flächendeckungskombination) 100 und dann die Aufheller-Zielflächendeckung (Aufhellerflächendeckung) 102 ermittelt. Im Folgenden wird - ohne Verzicht auf eine weitergehende Allgemeingültigkeit - anhand der in der Darstellung in Figur 12 exemplarisch gezeigten Reihenfolge zunächst die Ermittlung 96 der für das Proofpapier 26 notwendigen Flächendeckung der Tinten 20 erläutert.

Dabei werden die als Ergebnis der zweiten Messung 86 der Zielremissionsermittlung 82 bestimmten zweiten Spektralwerte 90 (zweite Messbedingung, insbesondere Messbedingung M2) verwendet. Bei einer Messung mit UV-Cut-Filter (Messbedingung M2) erfolgt die Beleuchtung im gesamten Bereich des sichtbaren Spektrums. Durch den UV-Cut-Filter wird der Aufheller im Auflagenpapier 24 nicht angeregt, so entsteht keine aufhellerinduzierte Emission.

Das Proofpapier 26 wird mit einem Farbtestchart bedruckt. Bei diesem handelt es sich um ein Testchart ähnlich dem Aufhellertestchart 52. Bei dem Farbtestchart werden einzelne Messfelder mit Inketjet-Farben 20; 20, 44 und mit einer jeweils vorgegebenen oder vorgebbaren Flächendeckung gedruckt. Das Prinzip ist dasselbe wie beim Aufhellertestchart 52, so dass auf die dortigen Erläuterungen verwiesen wird. Die Messfelder des Farbtestcharts werden - wie oben beim Aufhellertestchart 52 beschrieben - vermessen, aber nur unter der zweiten Messbedingung, insbesondere der Messbedingung M2 (mit UV-Cut-Filter). Die jeweils resultierenden Spektralwerte und die im Rahmen der Zielremissionsermittlung 82 ermittelten zweiten Spektralwerte 90 werden für die Ermittlung einer nicht aufhellerinduzierten Remissionscharakteristik gemäß Gleichung (1) verwendet. Dabei werden in die Gleichung (1) nacheinander alle für die Messfelder des Farbtestcharts resultierenden Spektralwerte und jeweils die bei der Zielremissionsermittlung 82 ermittelten zweiten Spektralwerte 90 eingesetzt. Daraus resultiert eine der Anzahl der Messfelder des Farbtestcharts entsprechende Anzahl von $\Delta E_s$-Werten. Aus diesen Werten wird der kleinste $\Delta E_s$-Wert ermittelt. Die Flächendeckung des diesem $\Delta E_s$-Wert zugehörigen Messfelds des Farbtestcharts ist die gesuchte Flächendeckung der Tinten 20; 20, 44 - Tinten-Zielflächendeckung 100. Damit ist im Rahmen der Substratangleichung 94 die Ermittlung 96 der für das Proofpapier 26 notwendigen Flächendeckung der Tinten 20; 20, 44 abgeschlossen.

Entsprechend der in der Darstellung in Figur 12 gezeigten Reihenfolge erfolgt jetzt im Rahmen der Substratangleichung 94 die Ermittlung 98 der für das Proofpapier 26 notwendigen Flächendeckung des Aufhellers 48. Dafür werden einerseits die im Rahmen der Look-Up-Funktionserstellung 70 generierte Look-Up-Funktion 78 oder entsprechende Daten und andererseits die im Rahmen der Zielremissionsermittlung 82 ermittelte Ziel-Remission 80 verwendet. Die Darstellung in Figur 13 zeigt (entsprechend Fig. 11) die Look-Up-Funktion 78 in einem Koordinatensystem, in dem auf der Abszisse die Flächendeckungen des Aufhellers 48 in den Messfeldern 54 des zugrunde liegenden Testcharts 52 (hier von 0% bis 100%) und auf der Ordinate die aufhellerinduzierte Emission ($\Delta E_s$) aufgetragen sind. Mit der zuvor ermittelten Ziel-Remission 80 kann über die Look-Up-Funktion 78 die zugehörige notwendige Flächendeckung des Aufhellers 48 - Aufheller-Zielflächendeckung 102 - abgelesen werden, wie dies in Figur 13 gezeigt ist. Beim gezeigten Beispiel ergibt sich aus der Ziel-Remission 80 eine notwendige Flächendeckung des Aufhellers 48 von 88%. Die anhand der Look-Up-Funktion 78 oder entsprechender Daten ermittelte Aufheller-Zielflächendeckung 102 ist ebenfalls ein Ergebnis der Substratangleichung 94. Mit der Ermittlung der Aufheller-Zielflächendeckung 102 ist die Ermittlung 98 der für das Proofpapier 26 notwendigen Flächendeckung des Aufhellers 48 abgeschlossen und bei der in Figur 12 gezeigten Substratangleichung 94 ist damit nach der zuvor erfolgten Ermittlung der Tinten-Zielflächendeckung 100 die Substratangleichung 94 insgesamt abgeschlossen.

Zumindest die Aufheller-Zielflächendeckung 102, optional die Aufheller-Zielflächendeckung 102 zusammen mit der Tinten-Zielflächendeckung 100, bilden die Substratangleichungsdaten 46, wie dies schematisch vereinfacht in Figur 14 gezeigt ist. Die Substratangleichungsdaten 46, insbesondere die Substratangleichungsdaten 46 mit der grundsätzlich optionalen Tinten-Zielflächendeckung 100, ersetzen die bisherige Weißpunktkodierung 40 (Fig. 5).

Aufgrund der Substratangleichungsdaten 46 erfolgt beim Bedrucken des Proofpapiers 26 mittels des Proofdruckers 10 (Fig 7) das Aufdrucken des Aufhellers 48 mit der zum Angleichen des Proofpapiers 26 an das Auflagenpapier 24 notwendigen Flächendeckung, nämlich mit der ermittelten Aufheller-Zielflächendeckung 102. Dies wird dadurch gewährleistet, dass die Substratangleichungsdaten 46, also zumindest die ermittelte Aufheller-Zielflächendeckung 102, mittels der Verarbeitungseinheit 14 verarbeitet werden und im Rahmen der Verarbeitung in die Ermittlung der Ansteuerungsdaten 16 für die Ansteuerung des Proofdruckers 10 einfließen. Aufgrund dieser Ansteuerungsdaten 16 druckt der Proofdrucker 10 zumindest auch den Aufheller 48, insbesondere die OBA-Tinte, auf das Proofpapier 26 und es ergibt sich ein an das Auflagenpapier 24 angepasster Proofdruck 36 (Fig. 7).

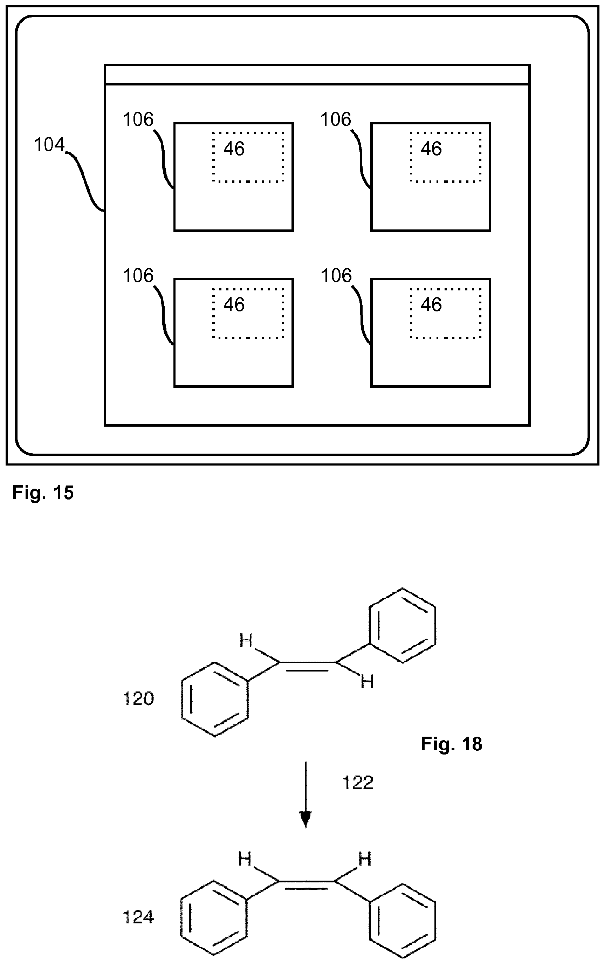

Die Substratangleichungsdaten 46 können zum Beispiel einer auf einem Computermonitor darstellbaren graphischen Arbeitsumgebung 104, nach Art eines sogenannten Desktops oder dergleichen, oder einzelnen Feldern 106 einer Arbeitsumgebung 104 zugeordnet sein oder werden, wie dies schematisch vereinfacht in der Darstellung in Figur 15 gezeigt ist. Bei einer solchen Arbeitsumgebung 104 führt zum Beispiel ein Platzieren eines eine Druckdatei 12 repräsentierenden Objekts auf der Arbeitsumgebung 104 oder einem Feld 106 der Arbeitsumgebung 104 dazu, dass die Druckdatei 12 mit den der Arbeitsumgebung 104 oder dem jeweiligen Feld 106 der Arbeitsumgebung 104 zugeordneten Substratangleichungsdaten 46 ausgedruckt wird. Die graphische Darstellung einzelner Substratangleichungsdaten 46 im Hintergrund jedes Felds 106 der in Figur 15 exemplarisch gezeigten Arbeitsumgebung 104 soll andeuten, dass mit jedem Feld 106 der Arbeitsumgebung 104 genau ein Satz von Substratangleichungsdaten 46 verknüpft ist. Die Substratangleichungsdaten 46 sind nicht oder jedenfalls nicht notwendig Teil der auf dem Computermonitor erscheinenden Darstellung.

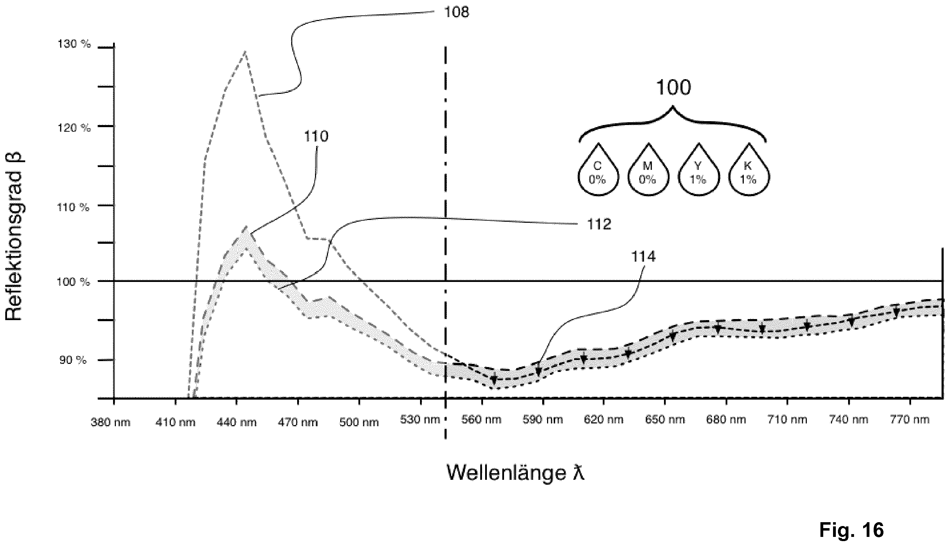

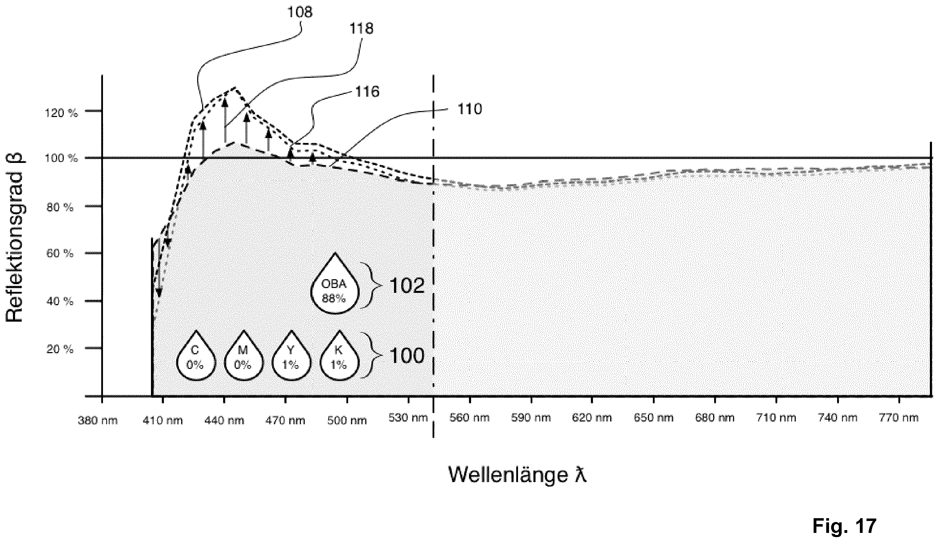

Die Figuren 16 und 17 zeigen anhand einer beispielhaft durchgeführten Angleichung eines Proofpapiers 26 an ein Auflagenpapier 24 ein mögliches Ergebnis des Verfahrens. Beide Figuren zeigen die spektrale Remission 108 des Auflagenpapiers 24 und die spektrale Remission 110 des Proofpapiers 26 im Vergleich. In Figur 16 sind zunächst nur die konventionellen Tinten 20; 20, 44 in der ermittelten Zielflächendeckung 100 aufgetragen worden. Die spektrale Remissionskurve des angepassten Proofpapiers 26 (Proofpapierremission 112) zeigt eine Veränderung im langwelligen sichtbaren Bereich 114, die nah an der spektralen Remission des Auflagenpapiers 24 (Auflagenpapierremission 108) in diesem Teil des sichtbaren Spektrums liegt. In Figur 17 kommt die ermittelte Ziel-Flächendeckung 102 für den Aufheller 48, insbesondere die OBA-Tinte, hinzu. Die spektrale Remission des mit den Tinten 20; 20, 44 und dem Aufheller 48 bedruckten Proofpapiers 26 (Proofpapierremission 116) liegt nun durch die Veränderung im kurzwelligen, sichtbaren Bereich des Spektrums 118 sehr nah an der spektralen Remissionscharakteristik des Auflagenpapiers 24 (Auflagenpapierremission 108). Damit ist erreicht, dass Auflagenpapier 24 und Proofpapier 26 unabhängig von der verwendeten Lichtquelle sowohl visuell wie auch messtechnisch gleich aussehen.

Als optionale Optimierung der eingesetzten Tintenmischung mit dem darin enthaltenen Aufheller 48 ist eine gezielte Anpassung des Verhältnisses von trans- und cis-Isomeren im Aufheller 48 möglich. Hierbei wird der Aufheller 48 vorzugsweise vor dem Verdrucken künstlich bestrahlt, alternativ ist eine Synthetisierung mit entsprechenden Anteilen denkbar.

Figur 18 zeigt ein beispielhaftes Aufhellermolekül in der aktiven (emissionsfähigen) trans-Form 120, das durch die Bestrahlung 122 in die inaktive (nicht emittierende) cis-Form 124 wechselt. Bei einer optionalen Weiterbildung des hier vorgestellten Verfahrens wird - zum Beispiel durch eine Bestrahlung oder Synthetisierung des Aufhellers 48 - für eine gegebene Beleuchtung, insbesondere eine Beleuchtung mit der Lichtart D50, ein stabiles Verhältnis beider Isomere vorgegeben, mit dem langzeitstabile Ergebnisse erzielt werden können.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Das flächendeckungsvariable Aufbringen von optischen Auhellern 48 zwecks Angleichung zweier Papiere 24, 26 zueinander wurde im vorliegenden Dokument im Ausführungsbeispiel, also ohne Verzicht auf eine weitergehende Allgemeingültigkeit, auf Basis eines Inkjetverfahrens beschrieben. Neben dem Inkjetverfahren sind eine Reihe weiterer Drucktechnolgien allgemein bekannt (z.B. Flexodruck, Tiefdruck, Offsetdruck usw.), welche auch auf einem flächendeckungsvariablen Verdrucken basieren. Auch in solchen Druckverfahren kann entsprechend dem hier vorgeschlagenen Ansatz ein Aufheller 48 zusammen mit den jeweiligen Druckfarben oder zumindest einer Druckfarbe oder in aufeinander folgenden Schritten ein Aufheller 48 und die Druckfarben flächendeckungsvariabel appliziert werden. Optional ist der Aufheller 48 dabei in Form einer verfahrensspezifischen, insbesondere farblosen Druckfarbenrezeptur enthalten. Ein denkbares Beispiel betrifft eine Papierherstellungslinie mit einem zusätzlichen Flexodruckwerk am Ende der Linie, bei welcher zuletzt nachträglich ein Aufheller appliziert wird, um einem Papier eine gewünschte Aufhelleremission zu verleihen, insbesondere durch Auftragen einer Druckfarbenrezeptur der oben genannten Art. Der anzurührenden Papiermasse wird in diesem Beispiel also kein optischer Aufheller 48 zwecks Weißpunkterhöhung beigegeben, vielmehr wird der Aufheller 48 am Ende nachträglich durch Aufdrucken appliziert.

Einzelne im Vordergrund stehende Aspekte der hier eingereichten Beschreibung lassen sich damit kurz wie folgt zusammenfassen: Angegeben werden ein Verfahren und ein nach dem Verfahren arbeitendes System zum Angleichen eines Proofpapiers 26 an ein zu simulierendes Auflagenpapier 24 zum Erhalt einer lichtartunabhängigen, messtechnischen und/oder visuellen Übereinstimmung, wobei zur Angleichung an das Auflagenpapier 24 beim Erstellen eines Proofdrucks 36 mittels eines Proofdruckers 10 auf das Proofpapier 26 ein Aufheller 48 mit einer als Aufheller-Zielflächendeckung 102 vorgegebenen Flächendeckung aufgedruckt wird. Das System ist zur Ausführung des Verfahrens bestimmt und eingerichtet und weist Mittel, zum Beispiel eine Verarbeitungseinheit 14, zur Ausführung des Verfahrens auf.

Bezugszeichenliste

| 10 | Proofdrucker (Inkjet-Drucker) |
| 12 | Druckdatei |
| 14 | Verarbeitungseinheit |
| 16 | Ansteuerungsdaten |
| 18 | Aufzeichnungsmedium |
| 20 | Tinten / Inkjetfarben |
| 22 | Druck |
| 24 | Auflagenpapier |
| 26 | Proofpapier |

| | |
|---|---|
| 28 | Beleuchtung |
| 30 | visuelle Abmusterung |
| 32 | Messung |
| 34 | Aufdrucken |
| 36 | Proofdruck |
| 38 | Druckbedingungen |
| 40 | Weißpunkt / Weißpunktkodierung |
| 42 | Kalibrierungsdaten |
| 44 | Inkjetfarben mit light-Abstufungen |
| 46 | Substratangleichungsdaten |
| 48 | Aufheller |
| 50 | Verfahrensschritt |
| 52 | Testchart |
| 54 | Messfeld |
| 56 | Messfeldauswertung |
| 58 | erste Messung |
| 60 | zweite Messung |
| 62 | erste Spektralwerte |
| 64 | zweite Spektralwerte |
| 66 | aufhellerinduzierte Emission |
| 68 | abspeichern / Verfahrensschritt des Abspeicherns |
| 70 | Look-Up-Funktionserstellung |
| 72 | Verfahrensschritt |
| 74 | Punkte (als Basis für die Look-Up-Funktion) |
| 76 | Polynombildung |
| 78 | Polynom / Look-Up-Funktion |
| 80 | Ziel-Remission |
| 82 | Zielremissionsermittlung |
| 84 | erste Messung |
| 86 | zweite Messung |
| 88 | erste Spektralwerte |
| 90 | zweite Spektralwerte |
| 92 | Verfahrensschritt |
| 94 | Substratangleichung |
| 96 | Ermittlung der für das Proofpapier notwendigen Flächendeckung der Tinten |
| 98 | Ermittlung 98 der für das Proofpapier notwendigen Flächendeckung des Aufhellers |
| 100 | Tinten-Zielflächendeckung |
| 102 | Aufheller-Zielflächendeckung |
| 104 | Arbeitsumgebung |
| 106 | Feld einer Arbeitsumgebung |
| 108 | spektrale Remission eines Auflagenpapiers |
| 110 | spektrale Remission eines Proofpapiers |
| 112 | spektrale Remission des Proofpapiers mit Angleichung durch konventionelle Tinte |
| 114 | Veränderung der spektralen Remission im langwelligen, sichtbaren Bereich |
| 116 | spektrale Remission des Proofpapiers mit Angleichung durch konventionelle und OBA-haltige Tinte |
| 118 | Veränderung der spektralen Remission im kurzwelligen, sichtbaren Bereich |
| 120 | Aufhellermolekül in der aktiven trans-Form |
| 122 | einwirkende Strahlung |
| 124 | Aufhellermolekül in der inaktiven cis-Form |

**Patentansprüche**

1. Verfahren zum Angleichen eines Proofpapiers (26) an ein zu simulierendes Auflagenpapier (24) zum Erhalt einer messtechnisch und/oder visuell lichtartunabhängigen Übereinstimmung, wobei zur Angleichung an das Auflagenpapier (26) beim Erstellen eines Proofdrucks (36) mittels eines Proofdruckers (10) auf das Proofpapier (26) ein Aufheller (48) mit einer als Aufheller-Zielflächendeckung (102) vorgegebenen Flächendeckung aufgedruckt wird.

**2.** Verfahren nach Anspruch 1,
wobei zur Ermittlung der Aufheller-Zielflächendeckung (102) das Auflagenpapier (24) und ein mittels des Proofdruckers (10) mit dem Aufheller (48) auf das Proofpapier (26) aufgedrucktes Aufhellertestchart (52) verglichen werden, insbesondere spektralfotometrisch vermessen werden,
wobei das Aufhellertestchart (52) eine Mehrzahl von Messfeldern (54) mit unterschiedlichen Flächendeckungen des Aufhellers (48) umfasst.

**3.** Verfahren nach Anspruch 2,
wobei jedes Messfeld (54) des Aufhellertestcharts (52) zweimal vermessen wird (58, 60) und zwar einmal mit einem ersten UV-Einfluss und einmal mit einem zweiten UV-Einfluss,
wobei auf Basis der Messergebnisse (62, 64) beider Messungen (58, 60) für jedes Messfeld (54) eine aufgrund der jeweiligen Flächendeckung des Aufhellers (48) resultierende aufhellerinduzierte Emission (66) ermittelt wird und wobei auf Basis einer für alle ausgewerteten Messfelder (54) ermittelten aufhellerinduzierten Emission (66) eine Look-Up-Funktion (78) oder eine Look-Up-Tabelle ermittelt wird.

**4.** Verfahren nach Anspruch 3,
wobei bei der spektralfotometrischen Vermessung des Auflagenpapiers (24) auch das Auflagenpapier (24) zweimal vermessen wird (84, 86) und zwar einmal mit UV-Einfluss und einmal ohne UV-Einfluss,
wobei auf Basis der Messergebnisse (88, 90) beider Messungen (84, 86) eine aufgrund von im Auflagenpapier (24) enthaltenem Aufheller resultierende aufhellerinduzierte Emission als Ziel-Remission (80) ermittelt wird und wobei anhand der Ziel-Remission (80) unter Verwendung der Look-Up-Funktion (78) oder der Look-Up-Tabelle die Aufheller-Zielflächendeckung (102) ermittelt wird.

**5.** Verfahren nach Anspruch 4,
wobei anhand der aufgrund der Messung ohne UV-Einfluss resultierenden Messergebnisse (90) der spektralfotometrischen Vermessung des Auflagenpapiers (24) sowie anhand einer spektralfotometrischen Vermessung eines mittels des Proofdruckers (10) auf das Proofpapier (26) aufgedruckten Farbtestcharts eine Tinten-Zielflächendeckung (100) ermittelt wird und
wobei beim Drucken des Proofdrucks (36) mittels des Proofdruckers (10) die Tinten-Zielflächendeckung (100) beim Drucken von Druckfarben (20, 44) berücksichtigt wird.

**6.** Verfahren nach einem der vorangehenden Ansprüche,
wobei der Aufheller (48) aktive, fluoreszierende trans-Isomere und inaktive cis-Isomere umfasst,
wobei zum Erhalt eines vorgegebenen oder vorgebbaren gewünschten Verhältnisses von aktiven trans-Isomeren und inaktiven cis-Isomeren im Aufheller (48)
der Anteil aktiver trans-Isomere im Aufheller (48) durch Bestrahlung vor dem Verdrucken oder im Zusammenhang mit dem Verdrucken reduziert wird und/oder
eine Synthetisierung des Aufhellers (48) mit einem dem gewünschten Verhältnis entsprechenden oder zumindest im Wesentlichen entsprechenden Verhältnis von aktiven trans-Isomeren und inaktiven cis-Isomeren erfolgt.

**7.** System zum Angleichen eines Proofpapiers (26) an ein zu simulierendes Auflagenpapier (24) zum Erhalt einer messtechnisch und/oder visuell lichtartunabhängigen Übereinstimmung, wobei das System Mittel zur Durchführung eines Verfahrens nach einem der vorangehenden Ansprüche umfasst.

**8.** System zum Angleichen eines Proofpapiers (26) an ein zu simulierendes Auflagenpapier (24) zum Erhalt einer messtechnisch und/oder visuell lichtartunabhängigen Übereinstimmung,
wobei das System einen Inkjet-Drucker (10) umfasst und
wobei zur Angleichung an das Auflagenpapier (24) beim Erstellen eines Proofdrucks (36) mittels des Proofdruckers (10) auf das Proofpapier (26) ein Aufheller (48) mit einer als Aufheller-Zielflächendeckung (102) vorgegebenen Flächendeckung aufdruckbar ist.

**9.** System nach Anspruch 8,
wobei mittels des Proofdruckers (10) mit dem Aufheller (48) ein Aufhellertestchart (52) auf das Proofpapier (26) aufdruckbar ist,
wobei das Aufhellertestchart (52) eine Mehrzahl von Messfeldern (54) mit unterschiedlichen Flächendeckungen des Aufhellers (48) umfasst und
wobei zur Ermittlung der Aufheller-Zielflächendeckung (102) das Auflagenpapier (24) und das Aufhellertestchart (52) spektralfotometrisch vermessbar sind.

**10.** System nach Anspruch 9,
wobei jedes Messfeld (54) des Aufhellertestcharts (52) zweimal vermessbar ist (58, 60) und zwar einmal mit einem ersten UV-Einfluss und einmal mit einem zweiten UV-Einfluss,
wobei auf Basis der Messergebnisse (62, 64) beider Messungen (58, 60) für jedes Messfeld (54) eine aufgrund der jeweiligen Flächendeckung des Aufhellers (48) resultierende aufhellerinduzierte Emission (66) ermittelbar ist und
wobei auf Basis einer für alle ausgewerteten Messfelder (54) ermittelbaren aufhellerinduzierten Emission (66) eine Look-Up-Funktion (78) oder eine Look-Up-Tabelle ermittelbar ist.

**11.** System nach Anspruch 10,
wobei bei der spektralfotometrischen Vermessung des Auflagenpapiers (24) auch das Auflagenpapier (24) zweimal vermessbar ist (84, 86) und zwar einmal mit UV-Einfluss und einmal ohne UV-Einfluss,
wobei auf Basis der Messergebnisse (88, 90) beider Messungen (84, 86) eine aufgrund von im Auflagenpapier (24) enthaltenem Aufheller resultierende aufhellerinduzierte Emission als Ziel-Remission (80) ermittelbar ist und
wobei anhand der Ziel-Remission (80) unter Verwendung der Look-Up-Funktion (78) oder der Look-Up-Tabelle die Aufheller-Zielflächendeckung (102) ermittelbar ist.

**12.** System nach Anspruch 11,
wobei anhand der aufgrund der Messung ohne UV-Einfluss resultierenden Messergebnisse (90) der spektralfotometrischen Vermessung des Auflagenpapiers (24) sowie anhand einer spektralfotometrischen Vermessung eines mittels des Proofdruckers (10) auf das Proofpapier (26) aufdruckbaren Farbtestcharts eine Tinten-Zielflächendeckung (100) ermittelbar ist und
wobei beim Drucken des Proofdrucks (36) mittels des Proofdruckers (10) die Tinten-Zielflächendeckung (100) beim Drucken von Druckfarben (20, 44) berücksichtigbar ist.

**13.** Tinte zur Verwendung in dem Verfahren nach einem der Ansprüche 1 bis 6 oder zur Verwendung mit dem System nach einem der Ansprüche 7 bis 12, wobei die Tinte mindestens einen Aufheller mit einer Konzentration von 0,2% bis 40% sowie einen Carrier in einer Konzentration von 0,2% bis 40% aufweist.

**14.** Computerprogramm mit Programmcodemitteln, um alle Schritte des Verfahrens nach einem der Ansprüche 1 bis 6 auszuführen, wenn das Computerprogramm im Rahmen eines Betriebs eines Systems nach einem der Ansprüche 7 bis 12 ausgeführt wird.

**15.** System nach einem der Ansprüche 7 bis 12, mit einer Verarbeitungseinheit (14) und einem Speicher, in den ein Computerprogramm nach Anspruch 14 geladen ist, das beim Betrieb des Systems durch die Verarbeitungseinheit (14) ausgeführt wird und dabei zu einer Ausführung eines Verfahrens nach einem der Ansprüche 1 bis 6 führt.

**Fig. 1 (Stand der Technik)**

**Fig. 2**

28

☼

D50

24

A

=

26

B

30

👁 = 👁

32

📈 = 📈

Fig. 3

**Fig. 4**

**Fig. 5**

28

-☼- **-** -☼-

D50 UVmin  D50 UVmax

24

A

≠

26

B

34

C M Y K } 20

30

👁 ≠ 👁

32

📈 ≠ 📈

**Fig. 6**

Fig. 7

Fig. 14

**Fig. 8**

Fig. 9A

**Fig. 9B**

52

54 OBA 0%
54 OBA 50%
54 OBA 100%

52

54 OBA 0%
54 OBA 25%

54 OBA 50%
54 OBA 75%
54 OBA 100%

52

54 OBA 0%
54 OBA 20%
54 OBA 40%

54 OBA 60%
54 OBA 80%
54 OBA 100%

Fig. 10

Fig. 11

Fig. 13

Fig. 12

**Fig. 15**

**Fig. 18**

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19917742 C2
- DE 102016202898
- DE 102016202903
- US 5221332 A
- US 5925178 A
- US 4021818 A
- US 4313124 A

**In der Beschreibung aufgeführte Nicht-Patentliteratur**

- Handbuch der Printmedien. Springer